# EUROPEAN PATENT APPLICATION

(11) **EP 4 797 299 A1**
(43) Date of publication of application: **26.08.2026**
(21) Application number: 24903172.5
(22) Date of filing: 22.05.2024
(51) Int. Cl.: H01G 4/30

(54) **MULTILAYER CERAMIC CAPACITOR**

(30) Priority: 15.12.2023 JP 2023212507
(71) Applicant: Murata Manufacturing Co., Ltd., Nagaokakyo-shi, Kyoto 617-8555 (JP)
(72) Inventor: KURITANI, Jun, Nagaokakyo-shi, Kyoto 617-8555 (JP)
(74) Representative: Stöckeler, Ferdinand
(86) International application number: PCT/JP2024/018800
(87) International publication number: WO 2025/126508

(57) **Abstract**

A multilayer ceramic capacitor is provided in which specifications and certain characteristics can be determined when the multilayer ceramic capacitor is viewed in a stacking direction of layers.

A multilayer ceramic capacitor 10 according to the present invention includes: a multilayer body having first and second main surfaces opposing each other in a stacking direction of layers, first and second side surfaces opposing each other in a first direction, the first direction being perpendicular to the stacking direction, and first and second end surfaces opposing each other in a second direction, the second direction being perpendicular to the stacking direction and the first direction; a first outer electrode disposed on the first end surface and the first main surface; a second outer electrode disposed on the second end surface and the first main surface; a third outer electrode disposed on the first end surface and the first main surface; and a fourth outer electrode disposed on the second end surface and the first main surface. At a position of 1/2 of a dimension of the multilayer body in a direction connecting the first side surface and the second side surface, a greatest distance, among distances between points on the first main surface and an intersection point between the first main surface and the first end surface or the second end surface in the stacking direction x (vertical direction), is set to a flatness D1, and a greatest distance, among distances between points on the first main surface and an intersection point between the second main surface and the first end surface or the second end surface in the stacking direction x (vertical direction), is set to a flatness D2. The flatness D1 is greater than or equal to the flatness D2.

## Description

### Technical Field

The present invention relates to a multilayer ceramic capacitor.

### Background Art

There is a demand for thinner multilayer ceramic capacitors in accordance with the recent miniaturization of electronic devices incorporating multilayer ceramic capacitors.

Patent Document 1 discloses the following multilayer ceramic capacitor. Two adjacent sides of the multilayer ceramic capacitor are defined as first and second sides, and the ratio of the length of the first side to that of the second side is 0.9 to 1.1.

### Citation List

### Patent Document

Patent Document 1: Japanese Unexamined Patent Application Publication No. 2021-103730

### Summary of Invention

### Technical Problem

To suppress the occurrence of cracks, in the multilayer ceramic capacitor disclosed in Patent Document 1, a conductor is disposed in a region which contains an intersection point between a perpendicular bisector of one pair of adjacent two sides and another perpendicular bisector of another pair of adjacent two sides of a substantially rectangular shape of the multilayer ceramic capacitor. However, positional misalignment during the placement of the conductor may occur, and the thickness of the conductor may be increased.

Accordingly, it is a principal object of the present invention to provide a multilayer ceramic capacitor that can suppress the occurrence of cracks by its structure alone.

### Solution to Problem

A multilayer ceramic capacitor according to the present invention includes: a multilayer body having first and second main surfaces opposing each other in a stacking direction of layers, first and second side surfaces opposing each other in a first direction, the first direction being perpendicular to the stacking direction, and first and second end surfaces opposing each other in a second direction, the second direction being perpendicular to the stacking direction and the first direction; a first outer electrode disposed on the first end surface and the first main surface; a second outer electrode disposed on the second end surface and the first main surface; a third outer electrode disposed on the first end surface and the first main surface; and a fourth outer electrode disposed on the second end surface and the first main surface. At a position of 1/2 of a dimension of the multilayer body in a direction connecting the first side surface and the second side surface, a greatest distance, among distances between points on the first main surface and an intersection point between the first main surface and the first end surface or the second end surface in the stacking direction x (vertical direction), is set to a flatness D1, and a greatest distance, among distances between points on the second main surface and an intersection point between the second main surface and the first end surface or the second end surface in the stacking direction x (vertical direction), is set to a flatness D2. The flatness D1 is greater than or equal to the flatness D2.

In the multilayer ceramic capacitor of the invention, at a position of 1/2 of a dimension of the multilayer body in a direction connecting the first side surface and the second side surface, a greatest distance, among distances between points on the first main surface and an intersection point between the first main surface and the first end surface or the second end surface in the stacking direction x (vertical direction), is set to a flatness D1, and a greatest distance, among distances between points on the second main surface and an intersection point between the second main surface and the first end surface or the second end surface in the stacking direction x (vertical direction), is set to a flatness D2. The flatness D1 is greater than or equal to the flatness D2. With this configuration, the stress applied to the multilayer ceramic capacitor by a pickup nozzle during mounting can be distributed over a flat surface (second main surface). Hence, a multilayer ceramic capacitor that can improve its strength during mounting can be provided.

### Advantageous Effects of Invention

According to the present invention, it is possible to provide a multilayer ceramic capacitor that can suppress the occurrence of cracks by its structure alone.

The above-described object, other objects, features, and advantages of the present invention will become more apparent from the following description of embodiments for carrying out the invention with reference to the drawings.

### Brief Description of Drawings

[Fig. 1] Fig. 1 is an external perspective view illustrating an example of a multilayer ceramic capacitor according to a first embodiment of the invention when the multilayer ceramic capacitor is viewed from one side.
[Fig. 2] Fig. 2 is an external perspective view illustrating an example of the multilayer ceramic capacitor according to the first embodiment of the invention when the multilayer ceramic capacitor is viewed from another side.
[Fig. 3] Fig. 3 is a front view illustrating an example of the multilayer ceramic capacitor according to the first embodiment of the invention.
[Fig. 4] Fig. 4 is a side view illustrating an example of the multilayer ceramic capacitor according to the first embodiment of the invention.
[Fig. 5] Fig. 5 is an external perspective view illustrating an example of a multilayer body of the multilayer ceramic capacitor according to the first embodiment of the invention.
[Fig. 6] Fig. 6 is a schematic sectional view taken along line VI-VI in Fig. 1.
[Fig. 7] Fig. 7 is a schematic sectional view taken along line VII-VII in Fig. 1.
[Fig. 8] Fig. 8 is a schematic sectional view taken along line VIII-VIII in Fig. 1.
[Fig. 9] Fig. 9 is a schematic sectional view taken along line IX-IX in Fig. 1.
[Fig. 10] Fig. 10 is a schematic sectional view taken along line X-X in Fig. 1.
[Fig. 11] Fig. 11 is a schematic sectional view taken along line XI-XI in Fig. 3.
[Fig. 12] Fig. 12 is an exploded perspective view of the multilayer body shown in Fig. 1.
[Fig. 13] Fig. 13 is a schematic sectional view illustrating an example of a multilayer ceramic capacitor according to a first modified example of the first embodiment of the invention.
[Fig. 14] Fig. 14 is a schematic sectional view illustrating an example of a multilayer ceramic capacitor according to a second modified example of the first embodiment of the invention.
[Fig. 15] Fig. 15 is an external perspective view illustrating an example of a multilayer ceramic capacitor according to a second embodiment of the invention when the multilayer ceramic capacitor is viewed from one side.
[Fig. 16] Fig. 16 is an external perspective view illustrating an example of the multilayer ceramic capacitor according to the second embodiment of the invention when the multilayer ceramic capacitor is viewed from another side.
[Fig. 17] Fig. 17 is a front view illustrating an example of the multilayer ceramic capacitor according to the first embodiment of the invention.
[Fig. 18] Fig. 18 is a side view illustrating an example of the multilayer ceramic capacitor according to the second embodiment of the invention.
[Fig. 19] Fig. 19 is an external perspective view illustrating an example of a multilayer body of the multilayer ceramic capacitor according to the second embodiment of the invention.
[Fig. 20] Fig. 20 is a schematic sectional view taken along line XX-XX in Fig. 15.
[Fig. 21] Fig. 21 is a schematic sectional view taken along line XXI-XXI in Fig. 15.
[Fig. 22] Fig. 22 is a schematic sectional view taken along line XXII-XXII in Fig. 15.
[Fig. 23] Fig. 23 is a schematic sectional view taken along line XXIII-XXIII in Fig. 15. Description of Embodiments

### A. First Embodiment

### 1. Multilayer Ceramic Capacitor

An example of a multilayer ceramic capacitor 10 according to an embodiment of the invention will now be described below.

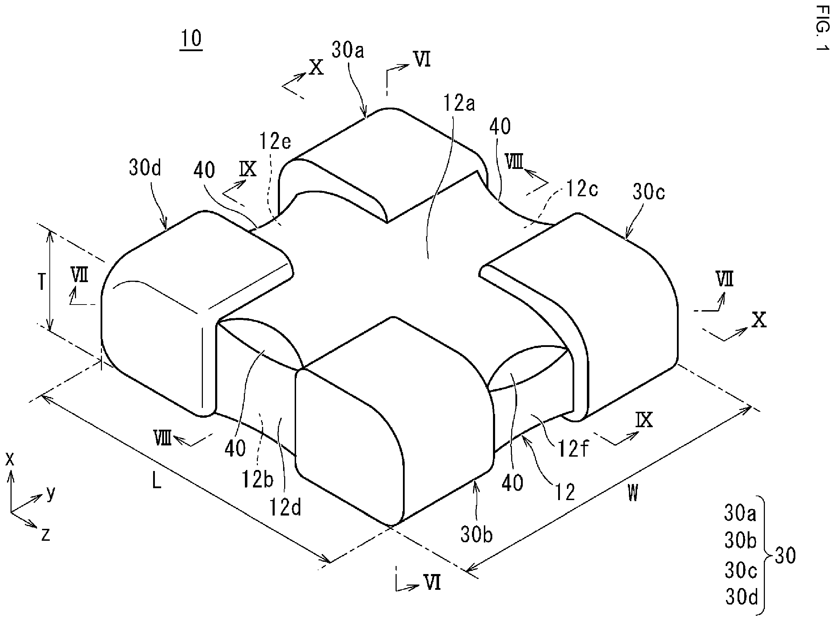

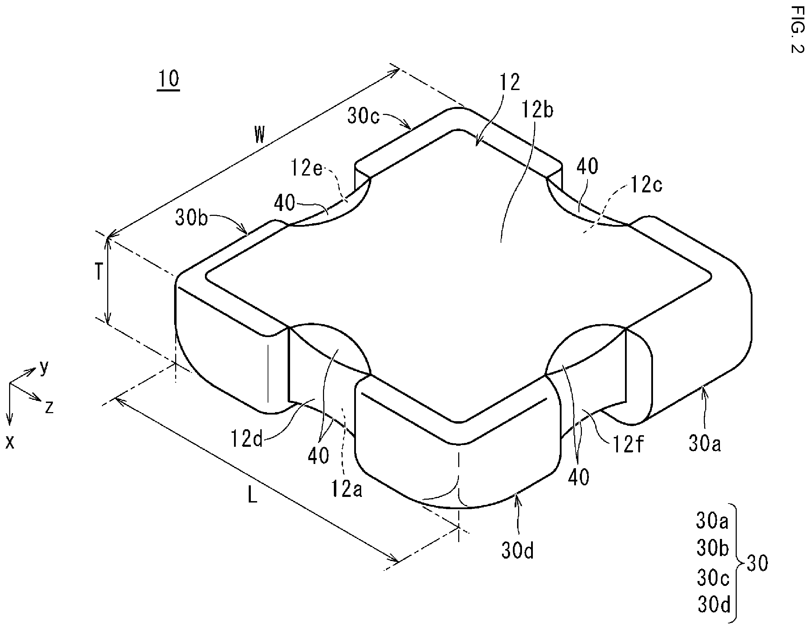

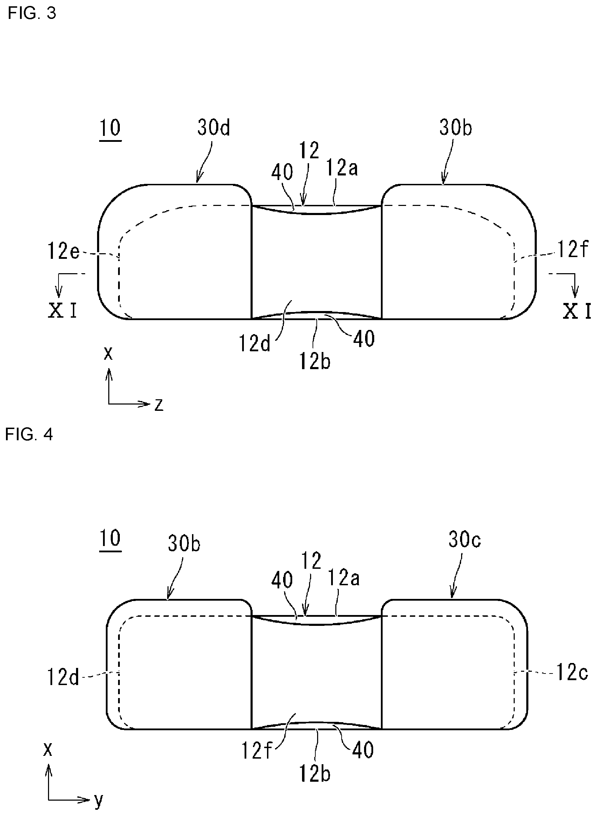

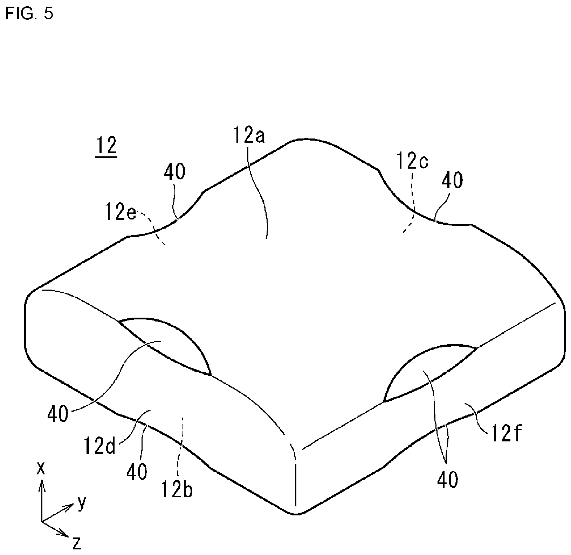

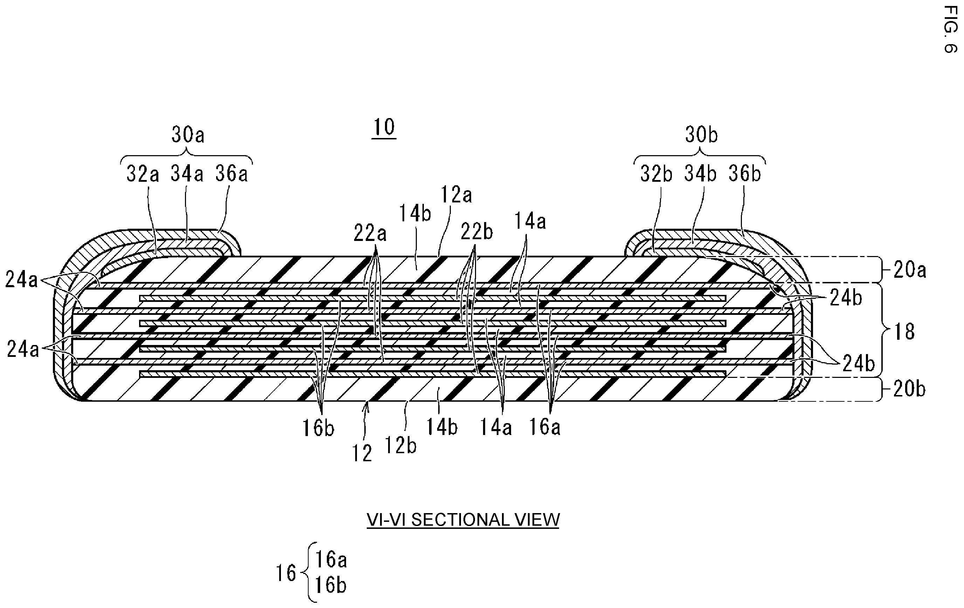

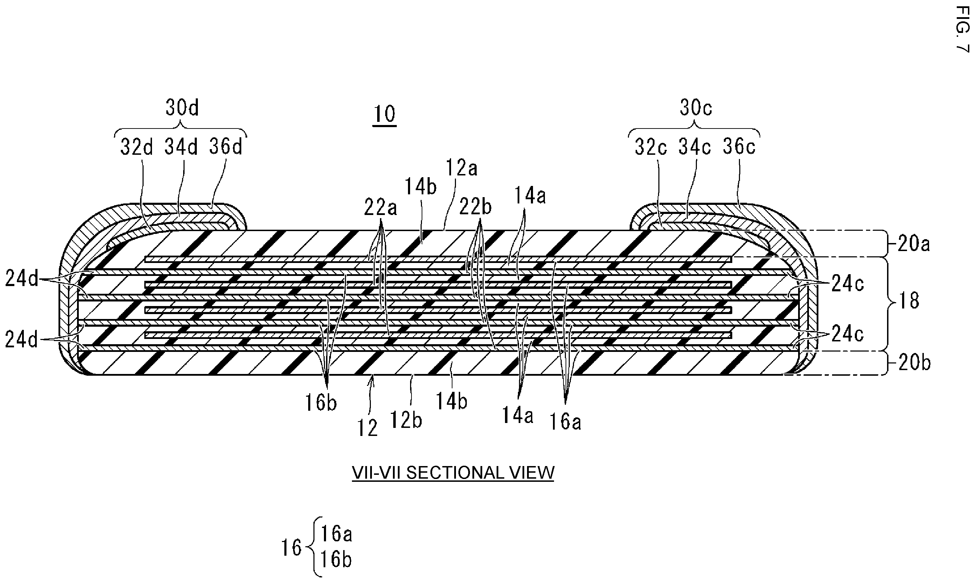

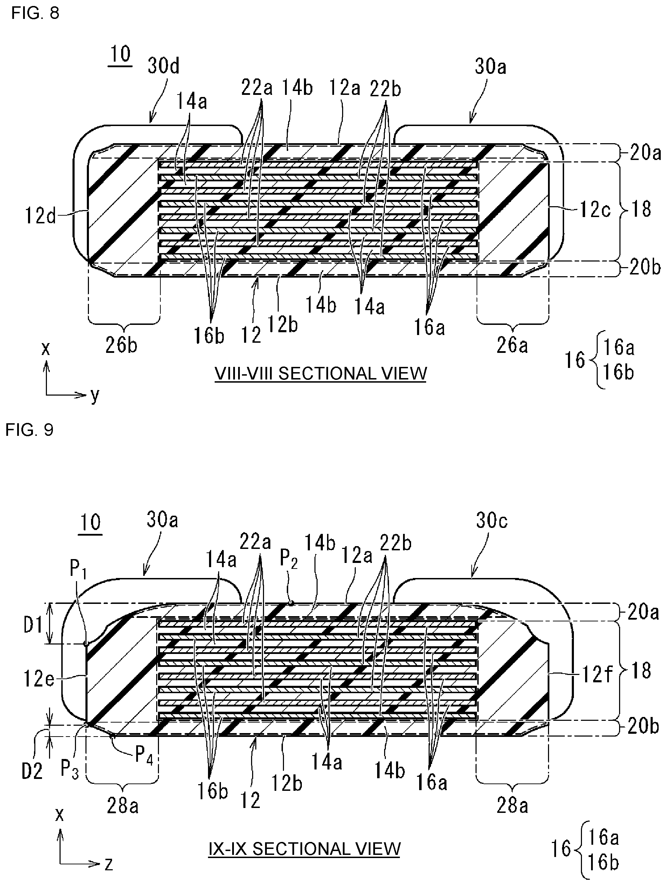

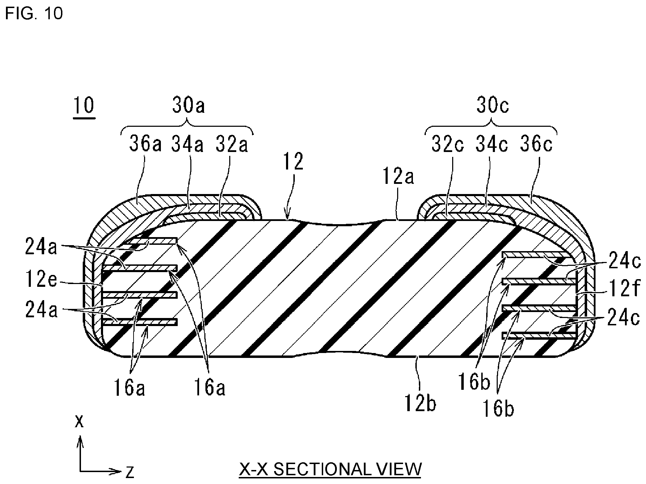

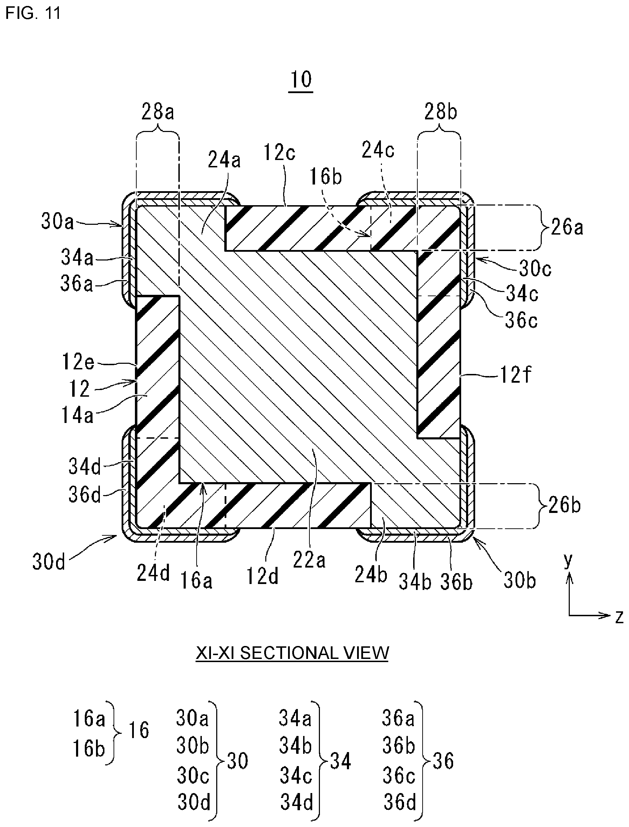

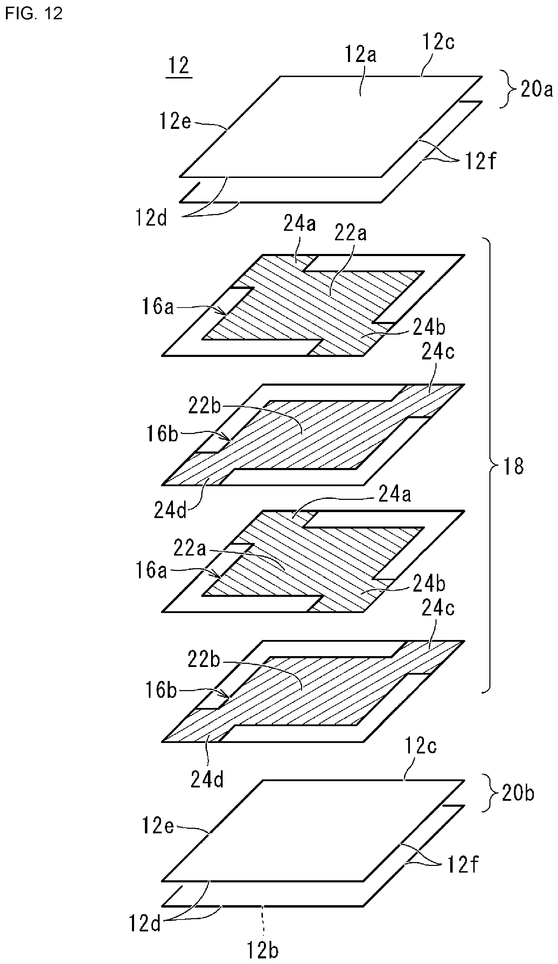

Fig. 1 is an external perspective view illustrating an example of a multilayer ceramic capacitor according to a first embodiment of the invention when the multilayer ceramic capacitor is viewed from one side. Fig. 2 is an external perspective view illustrating an example of the multilayer ceramic capacitor according to the first embodiment of the invention when the multilayer ceramic capacitor is viewed from another side. Fig. 3 is a front view illustrating an example of the multilayer ceramic capacitor according to the first embodiment of the invention. Fig. 4 is a side view illustrating an example of the multilayer ceramic capacitor according to the first embodiment of the invention. Fig. 5 is an external perspective view illustrating an example of a multilayer body of a multilayer ceramic capacitor according to the first embodiment of the invention. Fig. 6 is a schematic sectional view taken along line VI-VI in Fig. 1. Fig. 7 is a schematic sectional view taken along line VII-VII in Fig. 1. Fig. 8 is a schematic sectional view taken along line VIII-VIII in Fig. 1. Fig. 9 is a schematic sectional view taken along line IX-IX in Fig. 1. Fig. 10 is a schematic sectional view taken along line X-X in Fig. 1. Fig. 11 is a schematic sectional view taken along line XI-XI in Fig. 3. Fig. 12 is an exploded perspective view of the multilayer body shown in Fig. 1.

The multilayer ceramic capacitor 10 includes a multilayer body 12 and multiple outer electrodes 30.

The multilayer body 12 has a first main surface 12a and a second main surface 12b opposing each other in a stacking direction x of layers, a first side surface 12c and a second side surface 12d opposing each other in a first direction y that is perpendicular to the stacking direction x, and a first end surface 12e and a second end surface 12f opposing each other in a second direction z that is perpendicular to the stacking direction x and the first direction y. The direction in which the first main surface 12a and the second main surface 12b of the multilayer body 12 are connected to each other is the stacking direction x.

The corners and the ridge portions of the multilayer body 12 are preferably rounded. The corner is a portion at which three adjacent surfaces of the multilayer body 12 intersect each other. The ridge portion is a portion at which two adjacent surfaces of the multilayer body 12 intersect each other. Irregularities, for example, may be formed on some or all of the first and second main surfaces 12a and 12b, the first and second side surfaces 12c and 12d, and the first and second end surfaces 12e and 12f.

The flatness D2 of the second main surface 12b is smaller than or equal to the flatness D1 of the first main surface 12a. This means that the flatness of the second main surface 12b is equivalent to that of the first main surface 12a or the second main surface 12b is flatter than the first main surface 12a. It is preferable that the central portion of the first main surface 12a is raised.

In the first embodiment, the flatness D1 and D2 are measured as follows. When the multilayer ceramic capacitor 10 is viewed in the stacking direction x, in a region including the position of 1/2W in the direction (first direction y) connecting the first and second side surfaces 12c and 12d of the multilayer ceramic capacitor 10 and also parallel to the direction (second direction z) connecting the first and second end surfaces 12e and 12f, the flatness D1 and D2 are measured with a laser microscope (made by KEYENCE CORPORATION: VK-X1000) at 20x magnification. The flatness is defined by the greatest distance among the distances between points on the main surface and the intersection point between the main surface and the end surface in the stacking direction x (vertical direction).

More specifically, the flatness D1 of the first main surface 12a is defined as follows.

As illustrated in Fig. 9, in a region including the position of 1/2W in the direction (first direction y) connecting the first and second side surfaces 12c and 12d of the multilayer ceramic capacitor 10 and also parallel to the direction (second direction z) connecting the first and second end surfaces 12e and 12f, the intersection point between the first main surface 12a and the first end surface 12e is set to an intersection point P₁, while a point on the first main surface 12a is set to a point P₂. Among the distances between P₁ and P₂, the greatest distance in the stacking direction x is set to the flatness D1 of the first main surface 12a in the second direction z.

The flatness D2 of the second main surface 12b is defined as follows.

As illustrated in Fig. 9, in a region including the position of 1/2W in the direction (first direction y) connecting the first and second side surfaces 12c and 12d of the multilayer ceramic capacitor 10 and also parallel to the direction (second direction z) connecting the first and second end surfaces 12e and 12f, the intersection point between the second main surface 12b and the first end surface 12e is set to an intersection point P₃, while a point on the second main surface 12b is set to a point P₄. Among the distances between P₃ and P₄, the greatest distance in the stacking direction x is set to the flatness D2 of the second main surface 12b in the second direction z.

By setting the flatness D1 to be greater than or equal to the flatness D2, the stress applied to the multilayer ceramic capacitor 10 by a pickup nozzle during mounting can be distributed over a flat surface. This can enhance the strength of the multilayer ceramic capacitor 10 during mounting.

The flatness D2 of the second main surface 12b is preferably 4.2 µm or smaller. This can ensure a sufficient level of flatness and also make the dimension of the multilayer body 12 in the stacking direction x relatively large, thereby improving the mechanical strength.

The multilayer body 12 includes multiple dielectric layers 14 and multiple inner electrodes 16. The dielectric layers 14 include inner dielectric layers 14a and outer dielectric layers 14b. The inner electrodes 16 include first inner electrodes 16a and second inner electrodes 16b.

The multilayer body 12 also includes an inner layer section 18, a first outer layer section 20a facing the first main surface 12a, and a second outer layer section 20b facing the second main surface 12b.

The first outer layer section 20a is located to face the first main surface 12a of the multilayer body 12 and is constituted by the multiple outer dielectric layers 14b disposed between the first main surface 12a and the inner electrode 16 positioned closest to the first main surface 12a.

The second outer layer section 20b is located to face the second main surface 12b of the multilayer body 12 and is constituted by the multiple outer dielectric layers 14b disposed between the second main surface 12b and the inner electrode 16 positioned closest to the second main surface 12b.

The region sandwiched between the first and second outer layer sections 20a and 20b is the inner layer section 18.

The inner layer section 18 includes the inner dielectric layers 14a, the first inner electrodes 16a that are each exposed at one end to the first side surface 12c and the first end surface 12e and each exposed at the other end to the second side surface 12d and the second end surface 12f, and the second inner electrodes 16b that are each exposed at one end to the first side surface 12c and the second end surface 12f and each exposed at the other end to the second side surface 12d and the first end surface 12e.

The dielectric layers 14 may be made of a dielectric material, for example. As the dielectric material, a dielectric ceramic material composed of BaTiO₃, CaTiO₃, SrTiO₃, or CaZrO₃, as a main component, for example, may be used. A dielectric ceramic material obtained by adding a subcomponent, such as a Mn compound, a Fe compound, a Cr compound, a Co compound, or a Ni compound, to such main components may be used. The inner dielectric layers 14a and the outer dielectric layers 14b may be formed of the same dielectric material or may be formed of different dielectric materials to differentiate between the function of the inner layer section 18 and that of the outer layer sections 20a and 20b. For example, a material having a high dielectric constant may be used for the inner dielectric layers 14a, and a material having high levels of moisture resistance, weather resistance, and mechanical strength may be used for the outer dielectric layers 14b. At least one of Si, Mg, Ba, and Mn may be added as an additive. The additive is present between ceramic particles.

If the inner dielectric layers 14a contain a large amount of CaTiO₃ or CaZrO₃ as a dielectric component, dielectric breakdown is less likely to occur between the first inner electrodes 16a and the second inner electrodes 16b. The above-described materials are only examples, and the inner dielectric layers 14a may use a different main component, such as SrTiO₃. If it is desired to enhance the capacitance of the multilayer ceramic capacitor 10, the inner dielectric layers 14a are preferably made of a material having a high dielectric constant, such as BaTiO₃.

The dielectric layers 14 may be formed of multiple crystal grains having a perovskite structure based on BaTiO₃, for example.

The inner dielectric layers 14a having a smaller thickness enhances the capacitance of the multilayer ceramic capacitor 10, and the crystal grain size is thus preferably 1 µm or smaller.

The number of dielectric layers 14 to be stacked is not particularly limited, but is preferably three to 700 including dielectric layers 14 forming the first and second outer layer sections 20a and 20b. The thickness of the inner dielectric layers 14a is preferably 0.4 to 2.0 µm, and the thickness of the outer dielectric layers 14b is preferably 2.0 to 100.0 µm.

### (Inner Electrode)

The inner electrodes 16 include multiple first inner electrodes 16a and multiple second inner electrodes 16b. The first inner electrodes 16a and the second inner electrodes 16b are alternately stacked on each other with the corresponding inner dielectric layers 14a interposed therebetween.

The first inner electrodes 16a are each disposed on the front surface of the corresponding inner dielectric layer 14a. The first inner electrodes 16a include first opposing electrode portions 22a which oppose the first and second main surfaces 12a and 12b and oppose the corresponding second inner electrodes 16b. The first inner electrodes 16a are stacked on each other in the direction in which the first and second main surfaces 12a and 12b are connected to each other.

The first inner electrodes 16a extend to the first side surface 12c and the first end surface 12e of the multilayer body 12 by means of first extending electrode portions 24a and extend to the second side surface 12d and the second end surface 12f of the multilayer body 12 by means of second extending electrode portions 24b. The length by which the first extending electrode portions 24a extend to the first side surface 12c may be substantially equal to the length by which the first extending electrode portions 24a extend to the first end surface 12e. The length by which the second extending electrode portions 24b extend to the second side surface 12d may be substantially equal to the length by which the second extending electrode portions 24b extend to the second end surface 12f.

The first inner electrodes 16a continuously extend to the first side surface 12c and the first end surface 12e of the multilayer body 12 by means of the first extending electrode portions 24a and continuously extend to the second side surface 12d and the second end surface 12f of the multilayer body 12 by means of the second extending electrode portions 24b. Alternatively, the first inner electrodes 16a may extend discontinuously. The first inner electrodes 16a may be exposed to only one of the first and second side surfaces 12c and 12d and the first and second end surfaces 12e and 12f.

The second inner electrodes 16b are each disposed on the front surface of the corresponding inner dielectric layer 14a which is different from the inner dielectric layers 14a on which the first inner electrodes 16a are disposed. The second inner electrodes 16b include second opposing electrode portions 22b which oppose the first and second main surfaces 12a and 12b and oppose the corresponding first inner electrodes 16a. The second inner electrodes 16b are stacked on each other in the direction in which the first and second main surfaces 12a and 12b are connected to each other.

The second inner electrodes 16b extend to the first side surface 12c and the second end surface 12f of the multilayer body 12 by means of third extending electrode portions 24c and extend to the second side surface 12d and the first end surface 12e of the multilayer body 12 by means of fourth extending electrode portions 24d. The length by which the third extending electrode portions 24c extend to the first side surface 12c may be substantially equal to the length by which the third extending electrode portions 24c extend to the second end surface 12f. The length by which the fourth extending electrode portions 24d extend to the second side surface 12d may be substantially equal to the length by which the fourth extending electrode portions 24d extend to the first end surface 12e.

The second inner electrodes 16b continuously extend to the first side surface 12c and the second end surface 12f of the multilayer body 12 by means of the third extending electrode portions 24c and continuously extend to the second side surface 12d and the first end surface 12e of the multilayer body 12 by means of the fourth extending electrode portions 24d. Alternatively, the second inner electrodes 16b may extend discontinuously. The second inner electrodes 16b may be exposed to only one of the first and second side surfaces 12c and 12d and the first and second end surfaces 12e and 12f.

When the multilayer ceramic capacitor 10 is viewed in the stacking direction x, a line connecting the first and second extending electrode portions 24a and 24b of the first inner electrodes 16a and a line connecting the third and fourth extending electrode portions 24c and 24d of the second inner electrodes 16b preferably intersect each other.

As illustrated in Fig. 8, the multilayer body 12 also includes a side portion (W gap) 26a of the multilayer body 12 positioned between the first side surface 12c and one end of each of the second opposing electrode portions 22b of the second inner electrodes 16b in the first direction y and a side portion (W gap) 26b of the multilayer body 12 positioned between the second side surface 12d and the other end of each of the first opposing electrode portions 22a of the first inner electrodes 16a in the first direction y.

As illustrated in Fig. 9, the multilayer body 12 also includes an end portion (L gap) 28a of the multilayer body 12 positioned between the first end surface 12e and one end of each of the second opposing electrode portions 22b of the second inner electrodes 16b in the second direction z and a side portion (L gap) 28b of the multilayer body 12 positioned between the second end surface 12f and the other end of each of the first opposing electrode portions 22a of the first inner electrodes 16a in the second direction z.

The first and second inner electrodes 16a and 16b may be made of a suitable conductive material, for example, a metal, such as Ni, Cu, Ag, Pd, and Au, or an alloy containing at least one of such metals, such as a Ni-Cu alloy and an Ag-Pd alloy. However, the material of the first and second inner electrodes 16a and 16b is not limited to these materials. The first and second inner electrodes 16a and 16b may be made of the same conductive material or may be made of different conductive materials.

If the first and second inner electrodes 16a and 16b contain Sn, the concentration of an electric field at the interface between the inner electrodes 16 and the dielectric layers 14 can be eased, which leads to improved reliability under high temperature loads. In this case, even if Sn is contained in only one of the first and second inner electrodes 16a and 16b, sufficient effects can be exhibited.

The total number of first and second inner electrodes 16a and 16b is preferably three to 700. The thickness of the first and second inner electrodes 16a and 16b is not particularly limited, but is preferably 0.2 to 2.0 µm, for example.

If the inner electrodes 16 are formed in the above-described shape, the multilayer ceramic capacitor 10 may be configured as follows.

As shown in Fig. 10, when the multilayer ceramic capacitor 10 is viewed in the first direction y, in a region inward from the first side surface 12c by 5 µm in the first direction y and also parallel to the second direction z (LT plane), the central portion of the first main surface 12a preferably has a recess 40, which is depressed in the stacking direction x. Additionally, in a region inward from the second side surface 12d by 5 µm in the first direction y and also parallel to the second direction z (LT plane), the central portion of the first main surface 12a preferably has a recess 40, which is depressed in the stacking direction x. As viewed in the stacking direction x with the first main surface 12a facing above, the central portion of the first side surface 12c and that of the second side surface 12d each have a recess. The second main surface 12b may be configured similarly to the first main surface 12a as described above.

When the multilayer ceramic capacitor 10 is viewed in the second direction z, in a region inward from the first end surface 12e by 5 µm in the second direction z and also parallel to the first direction y (WT plane), the central portion of the first main surface 12a preferably has a recess 40, which is depressed in the stacking direction x. Additionally, in a region inward from the second end surface 12f by 5 µm in the second direction z and also parallel to the first direction y, the central portion of the first main surface 12a preferably has a recess 40, which is depressed in the stacking direction x. As viewed in the stacking direction x with the first main surface 12a facing above, the central portion of the first end surface 12e and that of the second end surface 12f each have a recess. The second main surface 12b may be configured similarly to the first main surface 12a as described above.

In this manner, by providing the recesses 40 in only one of the main surfaces of the multilayer body 12, the first main surface 12a and the second main surface 12b can be distinguished from each other. Since the region between adjacent outer electrodes 30 on each end surface and the region between adjacent outer electrodes 30 on each side surface are curved, the outer electrodes 30, which will be discussed later, can be separated from each other by a greater distance. This can reduce the likelihood of electrical conduction between the outer electrodes 30. When the outer electrode 30 has an L-shaped configuration, the presence of a recess 40 on the main surface on which no outer electrode 30 is formed (second main surface 12b) can prevent a suction nozzle from coming into complete contact with the suction surface of the multilayer ceramic capacitor 10. This can avoid the excessive suction of the nozzle, thereby suppressing the occurrence of cracks and other defects caused by such excessive suction.

When the multilayer ceramic capacitor 10 is viewed in the first direction y, two or more projections protruding in the stacking direction x may be provided in a region that is inward from the first side surface 12c by 5 µm in the first direction y and that is also parallel to the second direction z (LT plane). Two or more projections protruding in the stacking direction x may also be provided in a region that is inward from the second side surface 12d by 5 µm in the first direction y and that is also parallel to the second direction z (LT plane). In this case, a region that is inward from the first end surface 12e or the second end surface 12f by 5 µm in the second direction z and that is also parallel to the first direction y is preferably flatter than the region including the position of 1/2 in the first direction y or the position of 1/2 in the second direction z and also the region inward by 5 µm in the first direction y.

Additionally, as viewed in the stacking direction x, the central portion of each of the first end surface 12e, second end surface 12f, first side surface 12c, and second side surface 12d may have a recess 40.

With the above-described configuration, since the region between adjacent outer electrodes 30 on each end surface and the region between adjacent outer electrodes 30 on each side surface are curved, the outer electrodes 30 can be separated from each other by a greater distance. This can reduce the likelihood of electrical conduction between the outer electrodes 30.

### (Outer Electrode)

The outer electrodes 30 are disposed on the multilayer body 12, as illustrated in Figs. 1 through 9.

The outer electrodes 30 include multiple outer electrodes 30 connected to the first and second inner electrodes 16a and 16b. The outer electrodes 30 include a first outer electrode 30a, a second outer electrode 30b, a third outer electrode 30c, and a fourth outer electrode 30d.

The first outer electrode 30a is disposed to cover the first extending electrode portions 24a of the first inner electrodes 16a on the first side surface 12c and the first end surface 12e and also to cover part of the first main surface 12a. The first outer electrode 30a is electrically connected to the first extending electrode portions 24a of the first inner electrodes 16a. The first outer electrode 30a may be disposed to cover the first extending electrode portions 24a, which are exposed on one of the first side surface 12c and the first end surface 12e.

The second outer electrode 30b is disposed to cover the second extending electrode portions 24b of the first inner electrodes 16a on the second side surface 12d and the second end surface 12f and also to cover part of the first main surface 12a. The second outer electrode 30b is electrically connected to the second extending electrode portions 24b of the first inner electrodes 16a. The second outer electrode 30b may be disposed to cover the second extending electrode portions 24b, which are exposed on one of the second side surface 12d and the second end surface 12f.

The third outer electrode 30c is disposed to cover the third extending electrode portions 24c of the second inner electrodes 16b on the first side surface 12c and the second end surface 12f and also to cover part of the first main surface 12a. The third outer electrode 30c is electrically connected to the third extending electrode portions 24c of the second inner electrodes 16b. The third outer electrode 30c may be disposed to cover the third extending electrode portions 24c, which are exposed on one of the first side surface 12c and the second end surface 12f.

The fourth outer electrode 30d is disposed to cover the fourth extending electrode portions 24d of the second inner electrodes 16b on the second side surface 12d and the first end surface 12e and also to cover part of the first main surface 12a. The fourth outer electrode 30d is electrically connected to the fourth extending electrode portions 24d of the second inner electrodes 16b. The fourth outer electrode 30d may be disposed to cover the fourth extending electrode portions 24d, which are exposed on one of the second side surface 12d and the first end surface 12f.

Inside the multilayer body 12, the first opposing electrode portions 22a of the first inner electrodes 16a and the second opposing electrode portions 22b of the second inner electrodes 16b face each other via the corresponding inner dielectric layers 14a, thereby forming electrostatic capacity. Accordingly, electrostatic capacity can be obtained between the first and second outer electrodes 30a and 30b connected to the first inner electrodes 16a and the third and fourth outer electrodes 30c and 30d connected to the second inner electrodes 16b, so that the characteristics of a capacitor are exhibited.

Each of the first through fourth outer electrodes 30a through 30d preferably includes a thin film layer 32, a lower plating layer 34, and an upper plating layer 36.

This will be more specifically discussed. The first outer electrode 30a preferably includes a first thin film layer 32a, a first lower plating layer 34a, and a first upper plating layer 36a. The second outer electrode 30b preferably includes a second thin film layer 32b, a second lower plating layer 34b, and a second upper plating layer 36b. The third outer electrode 30c preferably includes a third thin film layer 32c, a third lower plating layer 34c, and a third upper plating layer 36c. The fourth outer electrode 30d preferably includes a fourth thin film layer 32d, a fourth lower plating layer 34d, and a fourth upper plating layer 36d.

### (Thin Film Layer)

The thin film layers 32 include the first thin film layer 32a, second thin film layer 32b, third thin film layer 32c, and fourth thin film layer 32d.

The first thin film layer 32a is disposed to cover part of the first main surface 12a of the multilayer body 12 that is close to the first side surface 12c and the first end surface 12e and not to cover the first side surface 12c and the first end surface 12e.

The second thin film layer 32b is disposed to cover part of the first main surface 12a of the multilayer body 12 that is close to the second side surface 12d and the second end surface 12f and not to cover the second side surface 12d and the second end surface 12f.

The third thin film layer 32c is disposed to cover part of the first main surface 12a of the multilayer body 12 that is close to the first side surface 12c and the second end surface 12f and not to cover the first side surface 12c and the second end surface 12f.

The fourth thin film layer 32d is disposed to cover part of the first main surface 12a of the multilayer body 12 that is close to the first end surface 12e and the second side surface 12d and not to cover the first end surface 12e and the second side surface 12d.

Each of the first through fourth thin film layers 32a through 32d is preferably formed by the deposition of metal particles using sputtering, vapor deposition, or another technique. With this configuration, the thickness of the first through fourth thin film layers 32a through 32d in the connecting direction of the first and second main surfaces 12a and 12b of the multilayer body 12 can be set to 1 µm or smaller. This can sufficiently reduce the dimension of the multilayer ceramic capacitor 10 in the stacking direction x, thereby making the multilayer ceramic capacitor 10 thinner.

The dimensions of the first through fourth thin film layers 32a through 32d in the stacking direction x can be measured as follows. When the thin film layers are formed by the deposition of metal particles, an X-ray fluorescence spectrometer is used, and the density of a predetermined metal is obtained and is converted into the thickness from a calibration curve of this metal. Alternatively, a cross section of the thin film layer may be prepared by FIB and be observed with a scanning electron microscope, thereby measuring the thickness from an actual image.

When the first through fourth thin film layers 32a through 32d are formed by a certain thin film forming method, they are preferably made of a metal, such as Cu and Ni.

The thin film layers 32 of the multilayer ceramic capacitor 10 shown in Fig. 1 are formed by the deposition of metal particles using sputtering. When the thickness of the thin film layers 32 is 1 µm or smaller, the dimension of the multilayer ceramic capacitor 10 in the stacking direction x can be sufficiently reduced.

The first through fourth thin film layers 32a through 32d may be formed by taking the individual functions into account. For example, the first through fourth thin film layers 32a through 32d are preferably made of at least one of Ni, Cr, and Cu as a main component in terms of the adhesion with the multilayer body 12. Each of the first through fourth thin film layers 32a through 32d may have multiple layers.

The thin film layers 32 may be those containing a dielectric material and a metal component formed by screen printing. In this case, the thin film layers 32 and the ceramic component of the multilayer body 12 firmly adhere to each other, thereby enhancing the adhesion between the multilayer body 12 and the outer electrodes 30. In addition to a metal component, the thin film layers 32 may contain the same ceramic component as the main component of the inner dielectric layers 14a. The ceramic component contained in the thin film layers 32 can reduce the difference in the coefficient of thermal expansion between the multilayer body 12 and the thin film layers 32, thereby easing a stress applied to the thin film layers 32. The thin film layers 32 may contain a metal component other than Cu and Ni. The thin film layers 32 may contain a glass component, as well as a ceramic component. Examples of the glass component are oxides, such as those of Ba (barium), Sr (strontium), Si (silicon), Ca (calcium), Zn, Al, and B (boron). As a metal component other than Cu and Ni, Mg, Cr, Sr, Al, Na, and Fe may be contained. The thin film layers 32 may have a discontinuous shape. This means that the thin film layers 32 may be formed discontinuously as they are seen from the longitudinal direction and the vertical direction.

When the thin film layers 32 are formed by adding a ceramic material, the thickness may be measured as follows. After a cross section of the thin film layer 32 is polished, a photo of this cross section is taken with a digital microscope (made by KEYENCE CORPORATION: VHX-5000), for example, and then, the thickness is determined from the photo and is then converted. Alternatively, a cross section of the thin film layer 32 may be prepared by FIB and be observed with a scanning electron microscope, thereby measuring the thickness from an actual image.

### (Lower Plating Layer)

The lower plating layers 34 include the first lower plating layer 34a, second lower plating layer 34b, third lower plating layer 34c, and fourth lower plating layer 34d.

The first lower plating layer 34a is disposed to cover the first thin film layer 32a and the first side surface 12c and the first end surface 12e of the multilayer body 12.

The second lower plating layer 34b is disposed to cover the second thin film layer 32b and the second side surface 12d and the second end surface 12f of the multilayer body 12.

The third lower plating layer 34c is disposed to cover the third thin film layer 32c and the first side surface 12c and he second end surface 12f of the multilayer body 12.

The fourth lower plating layer 34d is disposed to cover the fourth thin film layer 32d and the second side surface 12d and the first end surface 12e of the multilayer body 12.

The lower plating layers 34 contain at least one of elements selected from Cu, Ni, Sn, Ag, Pd, an Ag-Pd alloy, and Au, for example. The lower plating layers 34 are preferably Cu-plating layers. In this case, the lower plating layers 34 may be directly connected to the inner electrodes 16. The lower plating layers 34 may include another Cu-plating layer having a different grain size.

The thickness of the lower plating layers 34 is preferably 1 to 10 µm, for example.

### (Upper Plating Layer)

The upper plating layers 36 include the first upper plating layer 36a, second upper plating layer 36b, third upper plating layer 36c, and fourth upper plating layer 36d.

The first upper plating layer 36a is disposed to cover the first lower plating layer 34a. The second upper plating layer 36b is disposed to cover the second lower plating layer 34b. The third upper plating layer 36c is disposed to cover the third lower plating layer 34c. The fourth upper plating layer 36d is disposed to cover the fourth lower plating layer 34d.

The upper plating layer 36 may be constituted only by a Sn-plating layer or may have a doublelayer structure of a Ni-plating layer and a Sn-plating layer or a Ni-plating layer and a Cu-plating layer. The upper plating layer 36 may be constituted by a Sn plating layer, a Ni plating layer, and a Sn plating layer. Ni plating can prevent the underlying electrode layer from being eroded by solder, while Sn plating can improve mountability of the multilayer ceramic capacitor 10.

The thickness of the upper plating layer 36 is preferably 1 to 10 µm, for example.

The plating layers may be constituted only by the lower plating layers 34. In this case, the first lower plating layer 34a is disposed to cover the first thin film layer 32a, and the second lower plating layer 34b is disposed to cover the second thin film layer 32b. Likewise, the third lower plating layer 34c is disposed to cover the third thin film layer 32c, and the fourth lower plating layer 34d is disposed to cover the fourth thin film layer 32d.

The plating layers preferably contain at least one of metals selected from Cu, Ni, Sn, Pb, Au, Ag, Pd, Bi, and Zn or an alloy containing some of these metals. The plating layers preferably do not contain glass. If an Au plating layer is used as the uppermost plating layer, bonding characteristics with an Au wire during wire bonding can be improved. If a Cu plating layer is used as the uppermost plating layer, bonding strength with vias, which are formed when the multilayer ceramic capacitor 10 is embedded in a mounting substrate.

The proportion of metal in the plating layers per unit volume is preferably 99% by volume or greater.

The thickness of each plating layer is preferably 0.5 to 10.0 µm.

The dimension of the multilayer ceramic capacitor 10 including the multilayer body 12 and the outer electrodes 30 in the first direction y is set to a dimension L. The dimension of the multilayer ceramic capacitor 10 including the multilayer body 12 and the outer electrodes 30 in the stacking direction x is set to a dimension T. The dimension of the multilayer ceramic capacitor 10 including the multilayer body 12 and the outer electrodes 30 in the second direction z is set to a dimension W.

As to the dimensions of the multilayer ceramic capacitor 10, the dimension W in the first direction y is preferably 0.2 to 3.2 mm, the dimension T in the stacking direction x is preferably 0.04 to 0.22 mm, and the dimension W in the second direction z is preferably 0.2 to 3.2 mm. The dimensions of the multilayer ceramic capacitor 10 are preferably those expressed by 7/10≤L/W≤10/7. With this arrangement, the multilayer body 12 can be formed in a substantially tetragonal shape, thereby improving the flexibility in mounting the multilayer ceramic capacitor 10.

In the multilayer ceramic capacitor 10 shown in Fig. 1, at the position of 1/2 in the direction connecting the first and second side surfaces 12c and 12d of the multilayer body 12, among the distances in the stacking direction x (vertical direction) between points on the first main surface 12a and the intersection point between the first main surface 12a and the first end surface 12e or the second end surface 12f, the greatest distance is set to the flatness D1, while, among the distances in the stacking direction x (vertical direction) between points on the second main surface 12b and the intersection point between the second main surface 12b and the first end surface 12e or the second end surface 12f, the greatest distance is set to the flatness D2. By setting the flatness D1 to be greater than or equal to the flatness D2, the stress applied to the multilayer ceramic capacitor 10 by a pickup nozzle during mounting can be distributed over a flat surface (second main surface 12b). This can enhance the strength of the multilayer ceramic capacitor 10 during mounting.

### 2. Modified Examples

### (1) First Modified Example

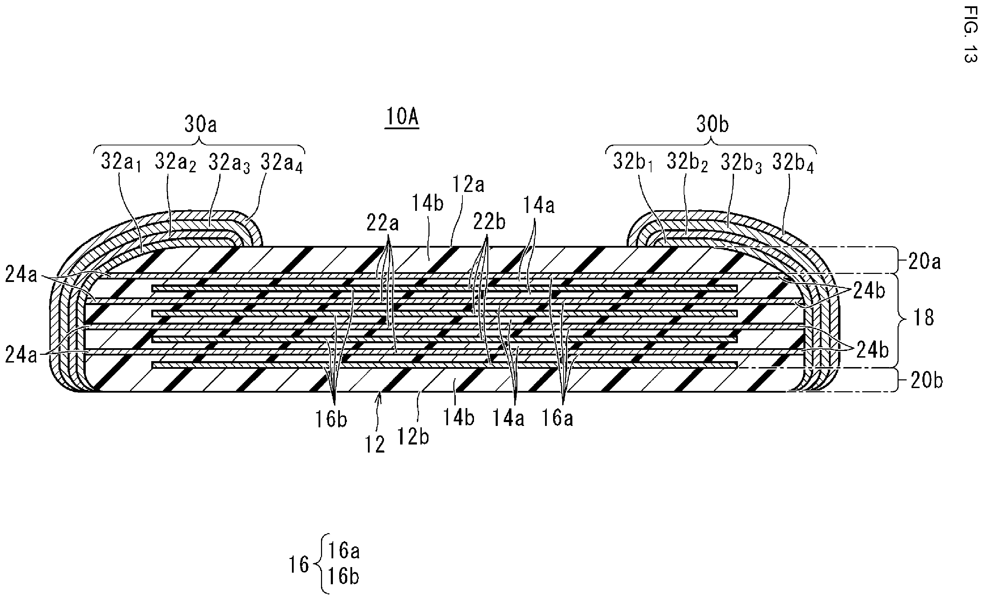

An example of a multilayer ceramic capacitor 10A according to a first modified example of the first embodiment of the invention will now be described below. Fig. 13 is a schematic sectional view illustrating an example of a multilayer ceramic capacitor according to the first modified example of the first embodiment of the invention. Identical or corresponding elements to those in Figs. 1 through 12 are designated by like reference numerals and a detailed explanation thereof will be omitted.

The outer electrode 30 of the multilayer ceramic capacitor 10A according to the first modified example does not include any plating layer and is constituted by multiple thin film layers. In the multilayer ceramic capacitor 10A shown in Fig. 13, the first outer electrode 30a is constituted only by four thin film layers 32a₁ through 32a₄ without including any plating layer, and the second outer electrode 30b is constituted only by four thin film layers 32b₁ through 32b₄ without including any plating layer.

In the first outer electrode 30a, the thin film layer 32a₁ is formed to extend from the first main surface 12a to cover the first side surface 12c and the first end surface 12e. Then, the thin film layers 32a₂, 32a₃, 32a₄ are sequentially formed on the surface of the thin film layer 32a₁.

In the second outer electrode 30b, the thin film layer 32b₁ is formed to extend from the first main surface 12a to cover the second side surface 12d and the second end surface 12f. Then, the thin film layers 32b₂, 32b₃, 32b₄ are sequentially formed on the surface of the thin film layer 32b₁.

The third thin film layer 32c of the third outer electrode 30c and the fourth thin film layer 32d of the fourth outer electrode 30d are also configured similarly to the first and second thin film layers 32a and 32b, though they are not shown.

In the first outer electrode 30a, the edge portion of each of the four thin film layers 32a₁ through 32a₄ toward the center of the multilayer body 12 may be formed to cover the edge portion of the corresponding lower layer, though this is not essential. Likewise, in the second outer electrode 30b, the edge portion of each of the four thin film layers 32b₁ through 32b₄ toward the center of the multilayer body 12 may be formed to cover the edge portion of the corresponding lower layer, though this is not essential.

The third thin film layer 32c of the third outer electrode 30c and the fourth thin film layer 32d of the fourth outer electrode 30d may be configured similarly to the first and second thin film layers 32a and 32b as described above, though they are not shown.

The multilayer ceramic capacitor 10A of the first embodiment shown in Fig. 13 achieves advantages similar to those of the above-described multilayer ceramic capacitor 10 and also achieves the following advantage.

In the multilayer ceramic capacitor 10A, the first outer electrode 30a is constituted only by the thin film layers 32a₁ through 32a₄ without including any plating layer, and the second outer electrode 30b is constituted only by the thin film layers 32b₁ through 32b₄ without including any plating layer. Additionally, the third and fourth outer electrodes 30c and 30d are also configured similarly. With this configuration, the dimension T in the stacking direction x, the dimension L in the first direction y, and the dimension L in the second direction z can be reduced, thereby implementing the multilayer ceramic capacitor having a smaller size.

### (2) Second Modified Example

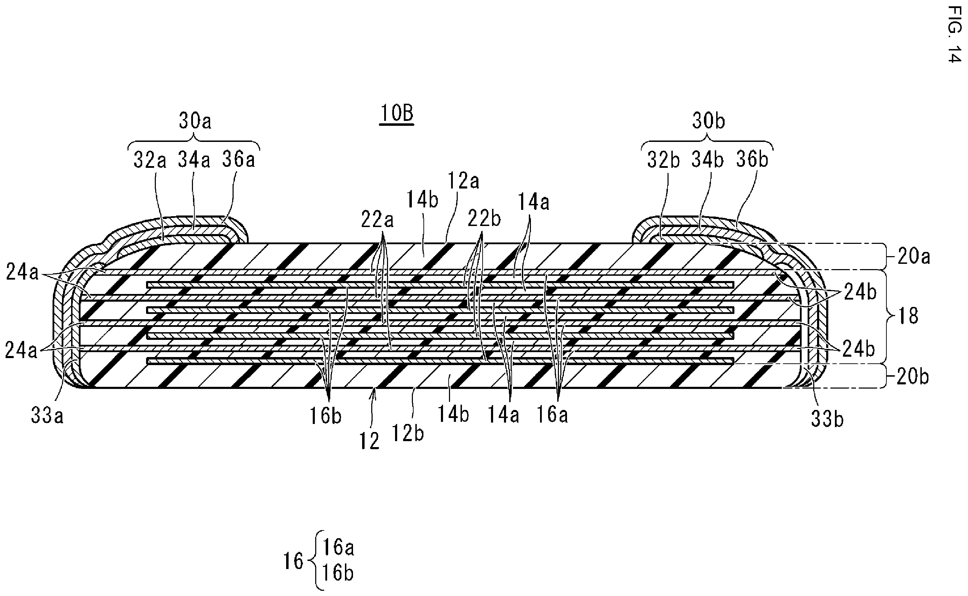

An example of a multilayer ceramic capacitor 10B according to a second modified example of the first embodiment of the invention will now be described below. Fig. 14 is a schematic sectional view illustrating an example of a multilayer ceramic capacitor according to the second modified example of the first embodiment of the invention. Identical or corresponding elements to those in Figs. 1 through 12 are designated by like reference numerals and a detailed explanation thereof will be omitted.

The outer electrode 30 of the multilayer ceramic capacitor 10B according to the second modified example of the first embodiment includes a direct plating layer 33, as shown in Fig. 14.

### (Direct Plating Layer)

The first outer electrode 30a includes a first direct plating layer 33a, and the second outer electrode 30b includes a second direct plating layer 33b. The third outer electrode 30c includes a third direct plating layer, and the fourth outer electrode 30d includes a fourth direct plating layer, though the third and fourth direct plating layers are not shown.

The first direct plating layer 33a is disposed to cover part of the first side surface 12c and part of the first end surface 12e of the multilayer body 12 and also to cover the ridge portions sandwiched between the first side surface 12c and the first end surface 12e. The first direct plating layer 33a is directly electrically connected to the first extending electrode portions 24a of the first inner electrodes 16a.

The second direct plating layer 33b is disposed to cover part of the second side surface 12d and part of the second end surface 12f of the multilayer body 12 and also to cover the ridge portions sandwiched between the second side surface 12d and the second end surface 12f. The second direct plating layer 33b is directly electrically connected to the second extending electrode portions 24b of the first inner electrodes 16a.

The third direct plating layer of the third outer electrode 30c and the fourth direct plating layer of the fourth outer electrode 30d are configured similarly to the first and second direct plating layers 33a and 33b as described above, though they are not shown.

The top end of the first direct plating layer 33a of the first outer electrode 30a is preferably disposed to overlap the bottom side of the first thin film layer 32a on the ridge portion between the first main surface 12a, the first side surface 12c, and the first end surface 12e of the multilayer body 12.

The top end of the second direct plating layer 33b of the second outer electrode 30b is preferably disposed to overlap the bottom side of the second thin film layer 32b on the ridge portion between the first main surface 12a, the second side surface 12d, and the second end surface 12f of the multilayer body 12.

The third direct plating layer of the third outer electrode 30c and the fourth direct plating layer of the fourth outer electrode 30d are disposed in a manner similar to the first and second direct plating layers 33a and 33b as described above, though they are not shown.

Part of the first direct plating layer 33a may extend to the second main surface 12b, and part of the second direct plating layer 33b may extend to the second main surface 12b. Part of the third direct plating layer and part of the fourth direct plating layer may also extend to the second main surface 12b.

The top end of the first direct plating layer 33a and that of the second direct plating layer 33b may be disposed to separate from the first thin film layer 32a and the second thin film layer 32b, respectively. The top end of the third direct plating layer and that of the fourth direct plating layer may be disposed to separate from the third thin film layer 32c and the fourth thin film layer 32d, respectively.

The material of the direct plating layer 33 is not particularly limited if it contains at least one of elements selected from Cu, Ni, Ag, Pd, an Ag-Pd alloy, and Au, for example, as a metal main component. If, for example, the first and second inner electrodes 16a and 16b are formed with Ni, the direct plating layers 33 preferably use Cu plating having good adhesion with Ni.

The direct plating layer 33 is formed by the growth of a plating metal from the inner electrode 16.

The thickness of each direct plating layer 33 is preferably 0.5 to 10.0 µm.

The multilayer ceramic capacitor 10B of the first embodiment shown in Fig. 14 achieves advantages similar to those of the above-described multilayer ceramic capacitor 10.

More specifically, because of the formation of the direct plating layer 33 on each side surface of the multilayer body 12, the thickness of the outer electrode 30 formed on the first and second main surfaces 12a and 12b in the stacking direction can further be reduced. It is thus possible to provide a multilayer ceramic capacitor that can be further reduced in height without impairing its mountability.

The thin film layer 32 may be formed to extend to each side surface of the multilayer body 12, though it is not shown.

More specifically, the first thin film layer 32a of the first outer electrode 30a is formed to cover part of the first main surface 12a and also to extend from the main surface to cover the first side surface 12c and the first end surface 12e.

The second thin film layer 32b of the second outer electrode 30b is formed to cover part of the first main surface 12a and also to extend from the main surface to cover the second side surface 12d and the second end surface 12f. The third thin film layer 32c of the third outer electrode 30c and the fourth thin film layer 32d of the fourth outer electrode 30d are formed similarly to the first and second thin film layers 32a and 32b.

The first thin film layer 32a is directly electrically connected to the first extending electrode portions 24a of the first inner electrodes 16a exposed on the first side surface 12c and the first end surface 12e. The second thin film layer 32b is directly electrically connected to the second extending electrode portions 24b of the first inner electrodes 16a exposed on the second side surface 12d and the second end surface 12f. The third thin film layer 32c is directly electrically connected to the third extending electrode portions 24c of the second inner electrodes 16b, and the fourth thin film layer 32d is directly electrically connected to the fourth extending electrode portions 24d of the second inner electrodes 16b.

The first thin film layer 32a may be configured such that the thin film layer formed on the first main surface 12a and that on the first side surface 12c and the first end surface 12e are formed continuously or formed discontinuously. The second thin film layer 32b may be configured such that the thin film layer formed on the first main surface 12a and that on the second side surface 12d and the second end surface 12f are formed continuously or formed discontinuously. The third thin film layer 32c of the third outer electrode 30c and the fourth thin film layer 32d of the fourth outer electrode 30d may be configured similarly to the first and second thin film layers 32a and 32b.

### 3. Manufacturing Method for Multilayer Ceramic Capacitor

A manufacturing method for a multilayer ceramic capacitor, which is an example of the multilayer ceramic capacitor of the first embodiment, will be described below.

### (a) Manufacturing Method for Multilayer Ceramic Capacitor

First, dielectric sheets and a conductive paste for inner electrodes are prepared. The dielectric sheets and the conductive paste contain a binder and a solvent. A known binder and a known solvent can be used.

Then, the conductive paste is applied onto the dielectric sheets to have a predetermined pattern by means of a certain printing method, such as inkjet printing, screen printing, or gravure printing. Then, dielectric sheets on which a pattern of the first inner electrode is formed and dielectric sheets on which a pattern of the second inner electrode is formed are prepared. Then, the sheets having the first inner electrode printed thereon and those having the second inner electrode printed thereon are alternately stacked on each other, thereby forming a base of the inner layer section 18.

Subsequently, a predetermined number of dielectric sheets without the pattern of the inner electrode are stacked to form a base of the first outer layer section 20a to face the first main surface 12a. Then, the base of the inner layer section 18 is stacked, and a predetermined number of dielectric sheets without the pattern of the inner electrode are stacked on the base of the inner layer section 18, thereby forming a base of the second outer layer section 20b to face the second main surface 12b. As a result, multilayer sheets are formed.

Subsequently, the multilayer sheets are pressed in the stacking direction by means of a certain technique, such as hydrostatic pressing, to form a multilayer block.

Then, the multilayer block is cut into a predetermined size to obtain multilayer chips. During this step, the corners and the ridge portions of the multilayer chips are rounded by barrel polishing or another technique. During barrel polishing, the multilayer chips are polished so that the flatness of the first main surface 12a in the second direction z becomes greater than that of the second main surface 12b in the second direction z. That is, the first main surface 12a in the second direction z is less flat than the second main surface 12b in the second direction z.

The recesses 40 to be provided on the first main surface 12a and the second main surface 12b are formed by removing the material forming the main surfaces 12a and 12b by a laser, for example.

Subsequently, the multilayer chips are fired to form the multilayer body 12. The firing temperature is preferably 900°C to 1400°C, though it depends on the type of ceramic and the material of the inner electrodes.

Then, the obtained multilayer body 12 is arranged on a work table, and the thin film layers 32 are formed on the first and second main surfaces 12a and 12b by sputtering. During this step, the multilayer body 12 is arranged so that the main surface which is less flat faces above, thereby making it possible to form the thin film layer on this main surface.

Then, the lower plating layer 34 is formed on the thin film layer 32 and the surface of the multilayer body 12, and the upper plating layer 36 is formed to cover the lower plating layer 34. More specifically, a Cu plating layer is formed on the thin film layer 32 as the lower plating layer 34, and then, a Ni plating layer and a Sn plating layer are formed on the surface of the lower plating layer 34 as the upper plating layer 36. As plating, either electrolytic plating or electroless plating may be employed. However, electroless plating requires pretreatment with a catalyst or another substance to improve the plating deposition rate, which makes the process complicated. Usually, therefore, electrolytic plating is preferable.

When the multilayer ceramic capacitor 10B according to the second modified example is manufactured, the direct plating layer 33 is formed before the thin film layer 32.

First, among the direct plating layers 33, the first direct plating layer 33a is formed on the first side surface 12c and the first end surface 12e of the multilayer body 12, and the second direct plating layer 33b is formed on the second side surface 12d and the second end surface 12f of the multilayer body 12. This will be explained more specifically. It is now assumed that a Cu plating layer is formed as the direct plating layer 33 by electrolytic plating or electroless plating. In this case, heat treatment is performed on the multilayer body 12 on which the Cu plating layer is formed so as to remove residual moisture remaining in the plating film and the interface between the multilayer body 12 and the direct plating layer 33.

Then, the multilayer body 12 having the direct plating layer 33 formed thereon is arranged on a work table, and the first thin film layer 32a and the second thin film layer 32b are formed on the first main surface 12a by sputtering.

Subsequently, the first lower plating layer 34a is formed on the first direct plating layer 33a disposed on the first side surface 12c and the first end surface 12e of the multilayer body 12 and on the first thin film layer 32a disposed on part of the first main surface 12a, and then, the first upper plating layer 36a is formed to cover the first lower plating layer 34a. Likewise, the second lower plating layer 34b is formed on the second direct plating layer 33b disposed on the second side surface 12d and the second end surface 12f of the multilayer body 12 and on the second thin film layer 32b disposed on part of the first main surface 12a, and then, the second upper plating layer 36b is formed to cover the second lower plating layer 34b.

The multilayer ceramic capacitor 10 of the embodiment shown in Fig. 1 can be manufactured as described above. To manufacture the multilayer ceramic capacitor 10A of the first modified example in Fig. 13, the shapes of the corresponding elements are appropriately changed in the individual steps.

### B. Second Embodiment

### 1. Multilayer Ceramic Capacitor

An example of a multilayer ceramic capacitor 110 according to a second embodiment of the invention will now be described below.

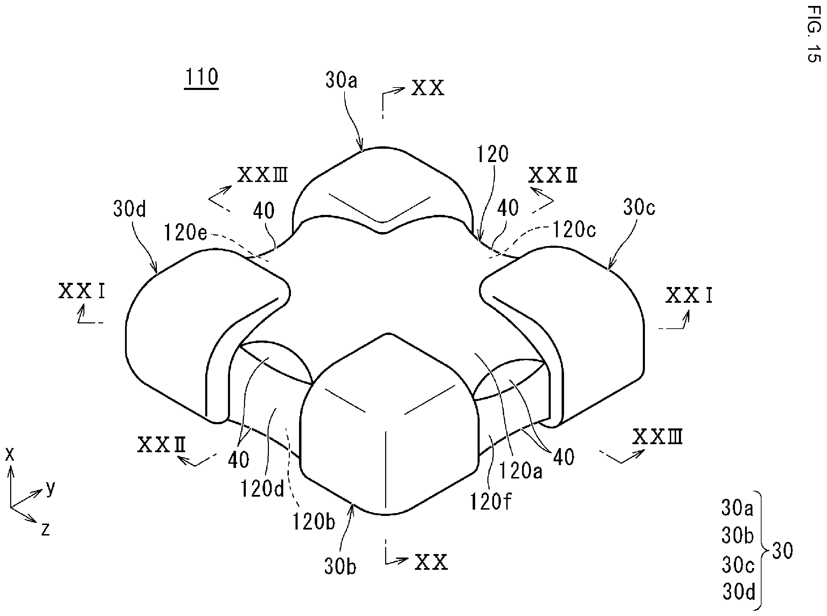

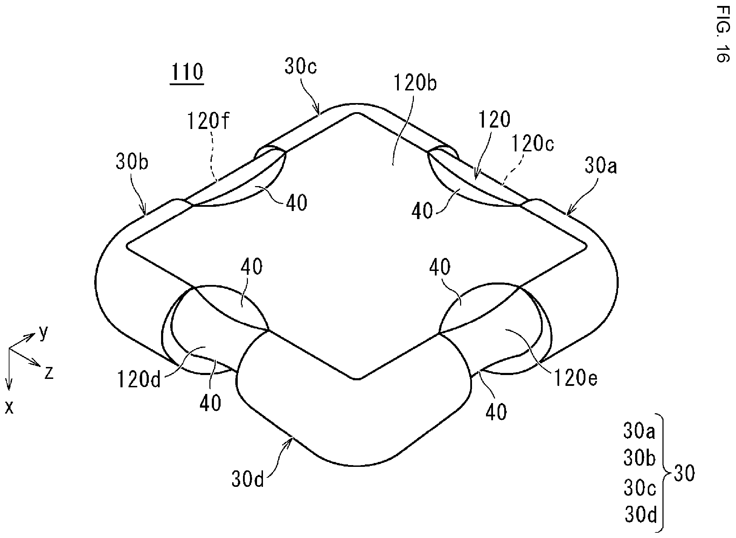

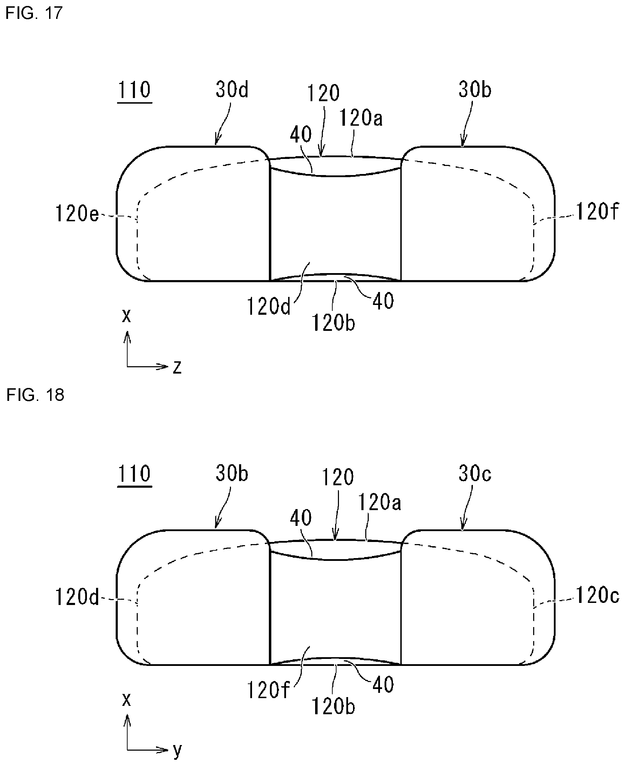

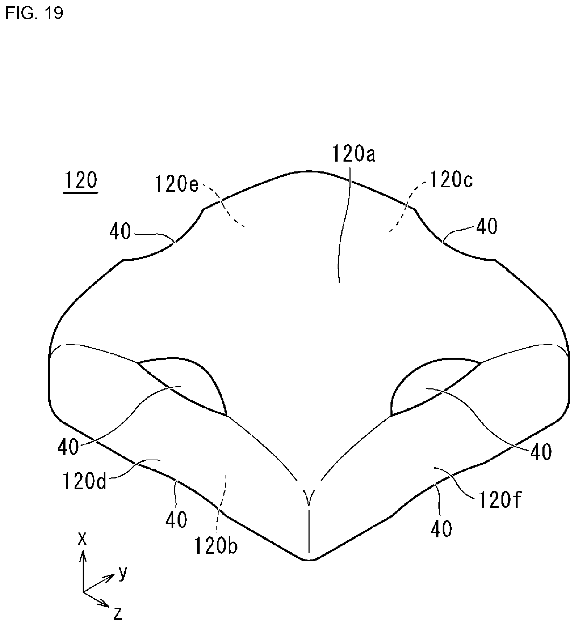

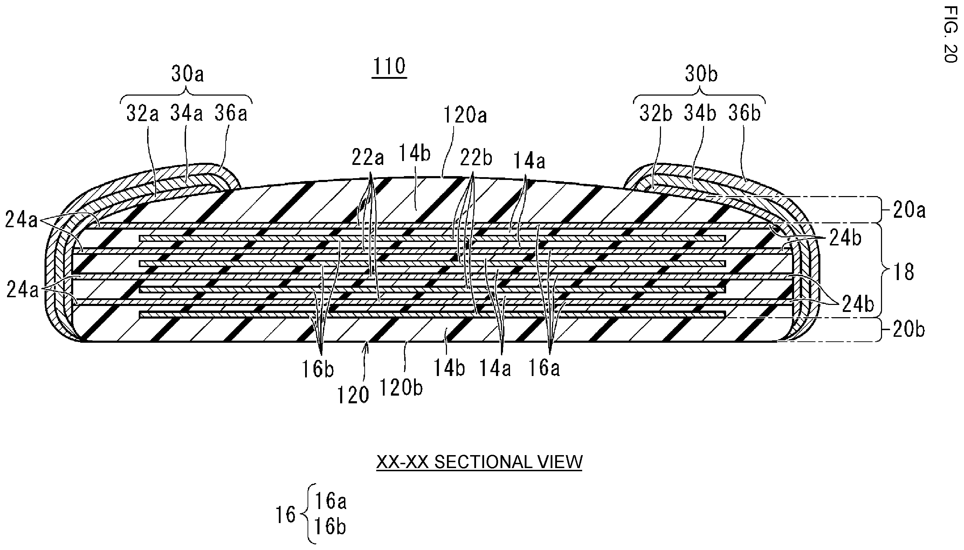

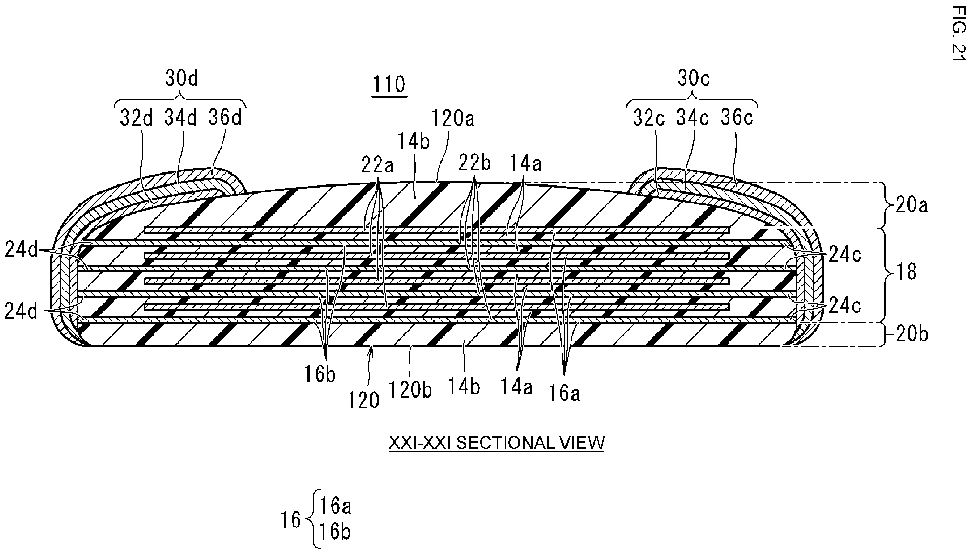

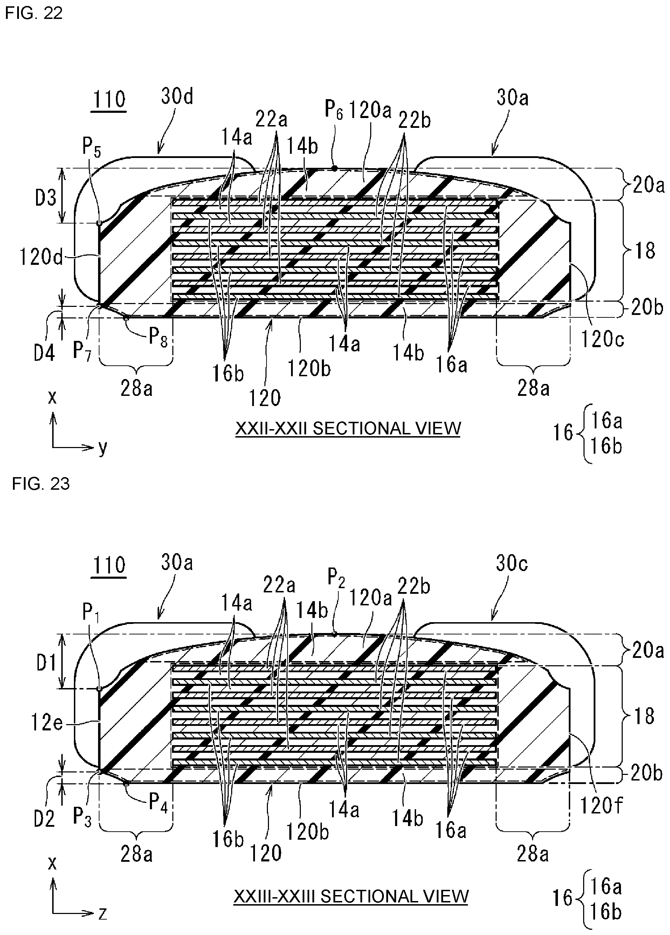

Fig. 15 is an external perspective view illustrating an example of a multilayer ceramic capacitor according to the second embodiment of the invention when the multilayer ceramic capacitor is viewed from one side. Fig. 16 is an external perspective view illustrating an example of the multilayer ceramic capacitor according to the second embodiment of the invention when the multilayer ceramic capacitor is viewed from another side. Fig. 17 is a front view illustrating an example of the multilayer ceramic capacitor according to the first embodiment of the invention. Fig. 18 is a side view illustrating an example of the multilayer ceramic capacitor according to the first embodiment of the invention. Fig. 19 is an external perspective view illustrating an example of a multilayer body of the multilayer ceramic capacitor according to the second embodiment of the invention. Fig. 20 is a schematic sectional view taken along line XX-XX in Fig. 15. Fig. 21 is a schematic sectional view taken along line XXI-XXI in Fig. 15. Fig. 22 is a schematic sectional view taken along line XXII-XXII in Fig. 15. Fig. 23 is a schematic sectional view taken along line XXIII-XXIII in Fig. 15. Identical or corresponding elements to those in Figs. 1 through 12 are designated by like reference numerals and a detailed explanation thereof will be omitted.

The multilayer ceramic capacitor 110 includes a multilayer body 120 and multiple outer electrodes 30.

The multilayer body 120 has a first main surface 120a and a second main surface 120b opposing each other in a stacking direction x of layers, a first side surface 120c and a second side surface 120d opposing each other in a first direction y that is perpendicular to the stacking direction x, and a first end surface 120e and a second end surface 120f opposing each other in a second direction z that is perpendicular to the stacking direction x and the first direction y. The direction in which the first main surface 120a and the second main surface 120b of the multilayer body 120 are connected to each other is the stacking direction x.

The corners and the ridge portions of the multilayer body 120 are preferably rounded. The corner is a portion at which three adjacent surfaces of the multilayer body 120 intersect each other. The ridge portion is a portion at which two adjacent surfaces of the multilayer body 120 intersect each other. Irregularities, for example, may be formed on some or all of the first and second main surfaces 120a and 120b, the first and second side surfaces 120c and 120d, and the first and second end surfaces 120e and 120f.

The flatness D1 of the first main surface 120a in the second direction z is smaller than or equal to the flatness D2 of the second main surface 120b in the second direction z. This means that the flatness of the second main surface 120b in the second direction z is equal to that of the first main surface 120a in the second direction z or the second main surface 120b in the second direction z is flatter than the first main surface 120a in the second direction z.

The flatness D1 and D2 are measured as follows. When the multilayer ceramic capacitor 110 is viewed in the stacking direction x, in a region including the position of 1/2W in the direction (first direction y) connecting the first and second side surfaces 120c and 120d of the multilayer ceramic capacitor 110 and also parallel to the direction (second direction z) connecting the first and second end surfaces 120e and 120f, the flatness D1 and D2 are measured with a laser microscope (made by KEYENCE CORPORATION: VK-X1000) at 20x magnification. The flatness is defined by the greatest distance among the distances between points on the main surface and the intersection point between the main surface and the end surface in the stacking direction x (vertical direction).

More specifically, the flatness D1 of the first main surface 120a in the second direction z is defined as follows.

As illustrated in Fig. 23, in a region including the position of 1/2W in the direction (first direction y) connecting the first and second side surfaces 120c and 120d of the multilayer ceramic capacitor 110 and also parallel to the direction (second direction z) connecting the first and second end surfaces 120e and 120f, the intersection point between the first main surface 120a and the first end surface 120e is set to an intersection point P₁, while a point on the first main surface 120a is set to a point P₂. Among the distances between P₁ and P₂, the greatest distance in the stacking direction x is set to the flatness D1 of the first main surface 120a in the second direction z.

The flatness D2 of the second main surface 120b in the second direction z is defined as follows.

As illustrated in Fig. 23, in a region including the position of 1/2W in the direction (first direction y) connecting the first and second side surfaces 120c and 120d of the multilayer ceramic capacitor 110 and also parallel to the direction (second direction z) connecting the first and second end surfaces 120e and 120f, the intersection point between the second main surface 120b and the first end surface 120e is set to an intersection point P₃, while a point on the second main surface 120b is set to a point P₃. Among the distances between P₃ and P₄, the greatest distance in the stacking direction x is set to the flatness D2 of the second main surface 120b in the second direction z.

The flatness D2 of the second main surface 120b in the second direction z is preferably 4.2 µm or smaller.

The flatness D3 of the first main surface 120a in the first direction y is smaller than or equal to the flatness D4 of the second main surface 120b in the first direction y. This means that the flatness of the second main surface 120b in the first direction y is equal to that of the first main surface 120a in the first direction y or the second main surface 120b in the first direction y is flatter than the first main surface 120a in the first direction y.

In the multilayer body 120 in the second embodiment, the flatness D3 and D4 are measured as follows. When the multilayer ceramic capacitor 10 is viewed in the stacking direction x, in a region including the position of 1/2L in the direction (second direction z) connecting the first and second end surfaces 120e and 120f of the multilayer ceramic capacitor 110 and also parallel to the direction (first direction y) connecting the first and second side surfaces 120c and 120d, the flatness D3 and D4 are measured with a laser microscope (made by KEYENCE CORPORATION: VK-X1000) at 20x magnification. The flatness is defined by the greatest distance among the distances between points on the main surface and the intersection point between the main surface and the side surface in the stacking direction x (vertical direction).

More specifically, the flatness D3 of the first main surface 120a in the first direction y is defined as follows.

As illustrated in Fig. 22, in a region including the position of 1/2L in the direction (second direction z) connecting the first and second end surfaces 120e and 120f of the multilayer ceramic capacitor 110 and also parallel to the direction (first direction y) connecting the first and second side surfaces 120c and 120d, the intersection point between the first main surface 120a and the first side surface 120c is set to an intersection point P₅, while a point on the first main surface 120a is set to a point P₆. Among the distances between P₅ and P₆, the greatest distance in the stacking direction x is set to the flatness D3 of the first main surface 120a in the first direction y.

The flatness D4 of the second main surface 120b in the first direction y is defined as follows.

As illustrated in Fig. 22, in a region including the position of 1/2L in the direction (second direction z) connecting the first and second end surfaces 120e and 120f of the multilayer ceramic capacitor 110 and also parallel to the direction (first direction y) connecting the first and second side surfaces 120c and 120d, the intersection point between the second main surface 120b and the first side surface 120c is set to an intersection point P₇, while a point on the second main surface 120b is set to a point P₈. Among the distances between P₇ and P₈, the greatest distance in the stacking direction x is set to the flatness D4 of the second main surface 120b in the first direction y.

The flatness D4 of the second main surface 120b in the first direction y is preferably 4.2 µm or smaller.

The central portion of the first main surface 120a is raised. With this configuration, the dimension of the central portion of the multilayer body 120 in the stacking direction x becomes larger than that of the other portions, thereby enhancing the mechanical strength.

The first inner electrodes 16a extend to the first side surface 120c and the first end surface 120e of the multilayer body 120 by means of first extending electrode portions 24a and extend to the second side surface 120d and the second end surface 120f of the multilayer body 120 by means of second extending electrode portions 24b.

The second inner electrodes 16b extend to the first side surface 120c and the second end surface 120f of the multilayer body 120 by means of third extending electrode portions 24c and extend to the second side surface 120d and the first end surface 120e of the multilayer body 120 by means of fourth extending electrode portions 24d.

In the multilayer ceramic capacitor 110 according to the second embodiment, the outer electrode 30 is disposed to cover the first main surface 120a of the multilayer body 120 but not to cover the second main surface 120b.

### (Outer Electrode)

The outer electrodes 30 are disposed on the multilayer body 120, as illustrated in Figs. 15 through 23.

The outer electrodes 30 include multiple outer electrodes 30 connected to the first and second inner electrodes 16a and 16b. The outer electrodes 30 include a first outer electrode 30a, a second outer electrode 30b, a third outer electrode 30c, and a fourth outer electrode 30d.

The first outer electrode 30a is disposed to cover the first extending electrode portions 24a of the first inner electrodes 16a on the first side surface 120c and the first end surface 120e and also to cover part of the first main surface 120a. The first outer electrode 30a is electrically connected to the first extending electrode portions 24a of the first inner electrodes 16a.

The second outer electrode 30b is disposed to cover the second extending electrode portions 24b of the first inner electrodes 16a on the second side surface 120d and the second end surface 120f and also to cover part of the first main surface 120a. The second outer electrode 30b is electrically connected to the second extending electrode portions 24b of the first inner electrodes 16a.

The third outer electrode 30c is disposed to cover the third extending electrode portions 24c of the second inner electrodes 16b on the first side surface 120c and the second end surface 120f and also to cover part of the first main surface 120a. The third outer electrode 30c is electrically connected to the third extending electrode portions 24c of the second inner electrodes 16b.

The fourth outer electrode 30d is disposed to cover the fourth extending electrode portions 24d of the second inner electrodes 16b on the second side surface 120d and the first end surface 120e and also to cover part of the first main surface 120a. The fourth outer electrode 30d is electrically connected to the fourth extending electrode portions 24d of the second inner electrodes 16b.

In the multilayer ceramic capacitor 110 according to the second embodiment, the central portion of the first main surface 120a is raised. With this configuration, the dimension of the central portion of the multilayer body 120 in the stacking direction x becomes larger than that of the other portions, thereby further enhancing the mechanical strength of the multilayer body 120.

### 2. Manufacturing Method for Multilayer Ceramic Capacitor

A manufacturing method for a multilayer ceramic capacitor, which is an example of the multilayer ceramic capacitor of the second embodiment, will be described below.

First, dielectric sheets and a conductive paste for inner electrodes are prepared. The dielectric sheets and the conductive paste contain a binder and a solvent. A known binder and a known solvent can be used.

Then, the conductive paste is applied onto the dielectric sheets to have a predetermined pattern by means of a certain printing method, such as inkjet printing, screen printing, or gravure printing. Then, dielectric sheets on which a pattern of the first inner electrode is formed and dielectric sheets on which a pattern of the second inner electrode is formed are prepared. Then, the sheets having the first inner electrode printed thereon and those having the second inner electrode printed thereon are alternately stacked on each other, thereby forming a base of the inner layer section 18.

Subsequently, a predetermined number of dielectric sheets without the pattern of the inner electrode are stacked to form a base of the first outer layer section 20a to face the first main surface 120a. Then, the base of the inner layer section 18 is stacked, and a predetermined number of dielectric sheets without the pattern of the inner electrode are stacked on the base of the inner layer section 18, thereby forming a base of the second outer layer section 20b to face the second main surface 120b. As a result, multilayer sheets are formed.

Subsequently, the multilayer sheets are pressed in the stacking direction by means of a certain technique, such as hydrostatic pressing, to form a multilayer block.

Then, the multilayer block is cut into a predetermined size to obtain multilayer chips. During this step, the corners and the ridge portions of the multilayer chips are rounded by barrel polishing or another technique. During barrel polishing, the multilayer chips are polished so that the flatness of the first main surface 120a in the first direction y becomes greater than that of the second main surface 120b in the first direction y and the flatness of the first main surface 120a in the second direction z becomes greater than that of the second main surface 120b in the second direction z.

The recesses 40 to be provided on the first main surface 120a and the second main surface 120b are formed by removing the material forming the main surfaces 120a and 120b by a laser, for example.

Subsequently, the multilayer chips are fired to form the multilayer body 120. The firing temperature is preferably 900°C to 1400°C, though it depends on the type of ceramic and the material of the inner electrodes.

Then, the obtained multilayer body 120 is arranged on a work table, and the thin film layers 32 are formed on the first main surface 120a by sputtering.

Then, the obtained multilayer body 120 is arranged on a work table, and the thin film layers 32 are formed on the first main surface 120a by sputtering.

Then, the lower plating layer 34 is formed on the thin film layer 32 and the surface of the multilayer body 120, and the upper plating layer 36 is formed to cover the lower plating layer 34. More specifically, a Cu plating layer is formed on the thin film layer 32 as the lower plating layer 34, and then, a Ni plating layer and a Sn plating layer are formed on the surface of the lower plating layer 34 as the upper plating layer 36. As plating, either electrolytic plating or electroless plating may be employed. However, electroless plating requires pretreatment with a catalyst or another substance to improve the plating deposition rate, which makes the process complicated. Usually, therefore, electrolytic plating is preferable.

The multilayer ceramic capacitor 110 of the second embodiment shown in Fig. 15 can be manufactured as described above.

By employing the manufacturing method for the multilayer ceramic capacitor of the second embodiment, the thickness of the dimension T of the outer electrodes 30 in the stacking direction x formed on the first and second main surfaces 120a and 120b can be reduced. It is thus possible to provide a multilayer ceramic capacitor that can be reduced in height without impairing its mountability.

### 3. Examples

To verify the above-described advantages of the multilayer ceramic capacitor according to the present invention, multilayer ceramic capacitors were fabricated as samples by the above-described manufacturing method, and an experiment was conducted to check for the occurrence of cracks with respect to variations in the flatness.

### (1) Specifications of Samples in Example

Multilayer ceramic capacitors of sample Nos. 1 through 9 having the following specifications were fabricated by the above-described manufacturing method for the multilayer ceramic capacitor.

### (Specifications of Multilayer Ceramic Capacitors)

· Dimensions of multilayer ceramic capacitor: L×W×T = 600 µm × 600 µm × 80 µm
· Total number of stacked inner electrode layers: 30
· Thickness per inner electrode layer: 0.5 µm
· Stacking-direction thickness of outer electrode disposed on first main surface: 10 µm
· Configuration of outer electrode on end surface: three-layer structure of a Cu plating layer, a Ni plating layer, and a Sn plating layer in order from the multilayer body
· Configuration of outer electrode on main surface: four-layer structure of a sputtering electrode containing at least one of Ni, Cr, and Cu, a Cu plating layer, a Ni plating layer, and a Sn plating layer in order from the multilayer body
· Flatness D1 of first main surface: fixed to 4.2 µm
· Flatness D2 of second main surface: varied within the range in Table 1 (see Table 1)

### (2) Measuring Method for Flatness

The flatness was measured as follows. When the multilayer ceramic capacitor was viewed in the stacking direction, in a region including the position of 1/2W in the direction (first direction y) connecting the first and second side surfaces of the multilayer ceramic capacitor and also parallel to the direction (second direction z) connecting the first and second end surfaces, the flatness was measured with a laser microscope (made by KEYENCE CORPORATION: VK-X1000) at 20x magnification. The flatness was defined by the greatest distance among the distances between points on the main surface and the intersection point between the main surface and the end surface in the stacking direction x (vertical direction).

### (3) Evaluation Method for Occurrence of Cracks

The flatness of the main surface of each multilayer ceramic capacitor sample, whose flatness had been adjusted in advance, was measured by the above-described method. Then, each multilayer ceramic capacitor sample was pressed by a nozzle having a buffering mechanism, and the occurrence of cracks on the main surface of each sample was checked with an optical microscope. The center of the nozzle was aligned with the intersection point of diagonal lines drawn on the second main surface, and each sample was pressed to such a degree necessary to reproduce the actual solder-mounting state. For crack inspection, the occurrence of cracks was checked when each sample was viewed in the stacking direction x. The occurrence of cracks was also checked when the cross section at the position of 1/2W of the multilayer body and the cross section at the position of 1/2 of the outer electrode in the direction connecting the first and second side surfaces of the multilayer body were polished. Out of 100 samples of each sample No., the number of samples in which cracks were occurred was counted.

### (3) Results

The number of occurrences of cracks in each of sample Nos. 1 through 9 was indicated in Table 1.

**[Table 1]**

| Sample No. | 1 | 2 | 3 | 4 | 5 | 6 | 7 | 8 | 9 |
|---|---|---|---|---|---|---|---|---|---|
| Flatness of second main surface (µm) | 0.9 | 1.8 | 3.1 | 4.0 | 4.2 | 4.5 | 5.0 | 6.0 | 7.0 |
| Number of occurrences of cracks | 0/100 | 0/100 | 0/100 | 1/100 | 4/100 | 6/100 | 11/100 | 18/100 | 32/100 |

Table 1 shows that, as to sample Nos. 1 through 5, the number of occurrences of cracks is relatively low since the flatness of the second main surface is smaller than or equal to that of the first main surface.

The numbers of occurrences of cracks in sample Nos. 1 through 5 are not more than five, resulting in good outcomes since the flatness of the second main surface of each sample is 4.2 µm or smaller.

From the above-described results, it is verified that, in the present invention, the number of occurrences of cracks in the multilayer body becomes relatively low since the flatness of the second main surface is smaller than that of the first main surface. It is also verified that, in each sample, the number of occurrences of cracks in the multilayer body becomes even lower if the flatness of the second main surface is 4.2 µm or smaller.

The embodiments of the present invention have been disclosed above, but the invention is not limited thereto. For example, even when the outer electrode 30 is disposed on the second main surface 12b as well as on the first main surface 12a, the occurrence of cracks can be suppressed if the pickup surface of the nozzle is configured to match the shape of the second main surface 12b.

Various changes may be made to the above-described embodiments with respect to the mechanisms, shapes, materials, quantities, positions or arrangements, and other factors, without departing from the spirit and scope of the technical concept and the objectives of the invention, and such changes are encompassed within the invention.

<1> A multilayer ceramic capacitor comprising:
   a multilayer body having first and second main surfaces opposing each other in a stacking direction of layers, first and second side surfaces opposing each other in a first direction, the first direction being perpendicular to the stacking direction, and first and second end surfaces opposing each other in a second direction, the second direction being perpendicular to the stacking direction and the first direction;
   a first outer electrode disposed on the first end surface and the first main surface;
   a second outer electrode disposed on the second end surface and the first main surface;
   a third outer electrode disposed on the first end surface and the first main surface; and
   a fourth outer electrode disposed on the second end surface and the first main surface,
   wherein, at a position of 1/2 of a dimension of the multilayer body in a direction connecting the first side surface and the second side surface,
      a greatest distance, among distances between points on the first main surface and an intersection point between the first main surface and the first end surface or the second end surface in the stacking direction x (vertical direction), is set to a flatness D1, and
      a greatest distance, among distances between points on the second main surface and an intersection point between the second main surface and the first end surface or the second end surface in the stacking direction x (vertical direction), is set to a flatness D2, and
   the flatness D1 is greater than or equal to the flatness D2.
<2> The multilayer ceramic capacitor according to <1>, wherein, at a position of 1/2 of a dimension of the multilayer body in a direction connecting the first end surface and the second end surface,
   a greatest distance, among distances between points on the first main surface and an intersection point between the first main surface and the first side surface or the second side surface in the stacking direction x (vertical direction), is set to a flatness D3, and
   a greatest distance, among distances between points on the first main surface and an intersection point between the second main surface and the first side surface or the second side surface in the stacking direction x (vertical direction), is set to a flatness D4, and
   the flatness D3 is greater than or equal to the flatness D4.
<3> A multilayer ceramic capacitor comprising:
   a multilayer body having first and second main surfaces opposing each other in a stacking direction of layers, first and second side surfaces opposing each other in a first direction, the first direction being perpendicular to the stacking direction, and first and second end surfaces opposing each other in a second direction, the second direction being perpendicular to the stacking direction and the first direction;
   a first outer electrode disposed on the first end surface and the first main surface;
   a second outer electrode disposed on the second end surface and the first main surface;
   a third outer electrode disposed on the first end surface and the first main surface; and
   a fourth outer electrode disposed on the second end surface and the first main surface,
   wherein, at a position of 1/2 of a dimension of the multilayer body in a direction connecting the first side surface and the second side surface,
      a greatest distance, among distances between points on the first main surface and an intersection point between the first main surface and the first end surface or the second end surface in the stacking direction x (vertical direction), is set to a flatness D1, and
      a greatest distance, among distances between points on the second main surface and an intersection point between the second main surface and the first end surface or the second end surface in the stacking direction x (vertical direction), is set to a flatness D2, and
   the flatness D2 is 4.2 µm or smaller.
<4> The multilayer ceramic capacitor according to Claim 3, wherein, at a position of 1/2 of a dimension of the multilayer body in a direction connecting the first end surface and the second end surface,
   a greatest distance, among distances between points on the first main surface and an intersection point between the first main surface and the first side surface or the second side surface in the stacking direction x (vertical direction), is set to a flatness D3, and
   a greatest distance, among distances between points on the first main surface and an intersection point between the second main surface and the first side surface or the second side surface in the stacking direction x (vertical direction), is set to a flatness D4, and
   the flatness D4 is 4.2 µm or smaller.
<5> The multilayer ceramic capacitor according to one of <1> to <4>, wherein a central portion of the first main surface is raised.
<6> The multilayer ceramic capacitor according to <1> or <2>, wherein the flatness D2 is 4.2 µm or smaller.
<7> The multilayer ceramic capacitor according to <2>, wherein the flatness D4 is 4.2 µm or smaller.
<8> The multilayer ceramic capacitor according to one of Claims <1> to <7>, wherein:
   the multilayer body includes an inner layer section,
   the inner layer section includes
      a first inner electrode that is exposed at one end to the first end surface and the first side surface and that is exposed at the other end to the second end surface and the second side surface,
      a second inner electrode that is exposed at one end to the first end surface and the second side surface and that is exposed at the other end to the second end surface and the first side surface, and
      an inner dielectric layer; and
   in a region that is inward from the first and second side surfaces by 5 µm in the direction connecting the first side surface and the second side surface, a central portion of the second main surface has a recess that is depressed in the stacking direction.
<9> The multilayer ceramic capacitor according to one of <1> to <8>, wherein:
   the multilayer body includes an inner layer section,
   the inner layer section includes
      a first inner electrode that is exposed at one end to the first end surface and the first side surface and that is exposed at the other end to the second end surface and the second side surface,
      a second inner electrode that is exposed at one end to the first end surface and the second side surface and that is exposed at the other end to the second end surface and the first side surface, and
      an inner dielectric layer; and
   in a region that is inward from the first and second side surfaces by 5 µm in the direction connecting the first side surface and the second side surface, a central portion of the first main surface has a recess that is depressed in the stacking direction.
<10> The multilayer ceramic capacitor according to one of <1> to <9>, wherein:
   the multilayer body includes an inner layer section,
   the inner layer section includes
      a first inner electrode that is exposed at one end to the first end surface and the first side surface and that is exposed at the other end to the second end surface and the second side surface,
      a second inner electrode that is exposed at one end to the first end surface and the second side surface and that is exposed at the other end to the second end surface and the first side surface, and
      an inner dielectric layer; and
   in a region that is inward from the first and second end surfaces by 5 µm in the direction connecting the first end surface and the second end surface, a central portion of the second main surface has a recess that is depressed in the stacking direction.
<11> The multilayer ceramic capacitor according to one of <1> to <10>, wherein:
   the multilayer body includes an inner layer section,
   the inner layer section includes
      a first inner electrode that is exposed at one end to the first end surface and the first side surface and that is exposed at the other end to the second end surface and the second side surface,
      a second inner electrode that is exposed at one end to the first end surface and the second side surface and that is exposed at the other end to the second end surface and the first side surface, and
      an inner dielectric layer; and
   in a region that is inward from the first and second end surfaces by 5 µm in the direction connecting the first end surface and the second end surface, a central portion of the first main surface has a recess that is depressed in the stacking direction.
<12> The multilayer ceramic capacitor according to <1> or <3>, wherein, as viewed in the stacking direction with the second main surface facing above, a central portion of the first side surface and a central portion of the second side surface each have a recess.
<13> The multilayer ceramic capacitor according to <1> or <3>, wherein, as viewed in the stacking direction with the first main surface facing above, a central portion of the first side surface and a central portion of the second side surface each have a recess.
<14> The multilayer ceramic capacitor according to <1> or <3>, wherein, as viewed in the stacking direction with the second main surface facing above, a central portion of the first end surface and a central portion of the second end surface each have a recess.
<15> The multilayer ceramic capacitor according to <1> or <3>, wherein, as viewed in the stacking direction with the first main surface facing above, a central portion of the first end surface and a central portion of the second end surface each have a recess.

### Reference Signs List

- 10, 10A, 10B, 110: multilayer ceramic capacitor
- 12, 120: multilayer body
- 12a, 120a: first main surface
- 12b, 120b: second main surface
- 12c, 120c: first side surface
- 12d, 120d: second side surface
- 12e, 120e: first end surface
- 12f, 120f: second end surface
- 14: dielectric layer
- 14a: inner dielectric layer
- 14b: outer dielectric layer
- 16: inner electrode
- 16a: first inner electrode
- 16b: second inner electrode
- 18: inner layer section
- 20a: first outer layer section
- 20b: second outer layer section
- 22a: first opposing electrode portion
- 22b: second opposing electrode portion
- 24a: first extending electrode portion
- 24b: second extending electrode portion
- 24c: third extending electrode portion
- 24d: fourth extending electrode portion
- 26a, 26b: side portion (W gap) of multilayer body
- 28a, 28b: end portion (L gap) of multilayer body
- 30: outer electrode
- 30a: first outer electrode
- 30b: second outer electrode
- 30c: third outer electrode
- 30d: fourth outer electrode
- 32: thin film layer
- 32a: first thin film layer
- 32b: second thin film layer
- 32c: third thin film layer
- 32d: fourth thin film layer
- 34: lower plating layer
- 34a: first lower plating layer
- 34b: second lower plating layer
- 34c: third lower plating layer
- 34d: fourth lower plating layer
- 36: upper plating layer
- 36a: first upper plating layer
- 36b: second upper plating layer
- 36c: third upper plating layer
- 36d: fourth upper plating layer
- 33: direct plating layer
- 33a: first direct plating layer
- 33b: second direct plating layer
- 40: recess
- D1 to D4: flatness
- x: stacking direction
- y: first direction
- z: second direction
- L: dimension of multiplayer ceramic capacitor in first direction
- W: dimension of multiplayer ceramic capacitor in second direction
- T: dimension of multiplayer ceramic capacitor in stacking direction

## Claims

1. A multilayer ceramic capacitor comprising:
a multilayer body having first and second main surfaces opposing each other in a stacking direction of layers, first and second side surfaces opposing each other in a first direction, the first direction being perpendicular to the stacking direction, and first and second end surfaces opposing each other in a second direction, the second direction being perpendicular to the stacking direction and the first direction;
a first outer electrode disposed on the first end surface and the first main surface;
a second outer electrode disposed on the second end surface and the first main surface;
a third outer electrode disposed on the first end surface and the first main surface; and
a fourth outer electrode disposed on the second end surface and the first main surface,
wherein, at a position of 1/2 of a dimension of the multilayer body in a direction connecting the first side surface and the second side surface,
a greatest distance, among distances between points on the first main surface and an intersection point between the first main surface and the first end surface or the second end surface in the stacking direction x (vertical direction), is set to a flatness D1, and
a greatest distance, among distances between points on the second main surface and an intersection point between the second main surface and the first end surface or the second end surface in the stacking direction x (vertical direction), is set to a flatness D2, and
the flatness D1 is greater than or equal to the flatness D2.

2. The multilayer ceramic capacitor according to Claim 1, wherein, at a position of 1/2 of a dimension of the multilayer body in a direction connecting the first end surface and the second end surface,
a greatest distance, among distances between points on the first main surface and an intersection point between the first main surface and the first side surface or the second side surface in the stacking direction x (vertical direction), is set to a flatness D3, and
a greatest distance, among distances between points on the first main surface and an intersection point between the second main surface and the first side surface or the second side surface in the stacking direction x (vertical direction), is set to a flatness D4, and
the flatness D3 is greater than or equal to the flatness D4.

3. A multilayer ceramic capacitor comprising:
a multilayer body having first and second main surfaces opposing each other in a stacking direction of layers, first and second side surfaces opposing each other in a first direction, the first direction being perpendicular to the stacking direction, and first and second end surfaces opposing each other in a second direction, the second direction being perpendicular to the stacking direction and the first direction;
a first outer electrode disposed on the first end surface and the first main surface;
a second outer electrode disposed on the second end surface and the first main surface;
a third outer electrode disposed on the first end surface and the first main surface; and
a fourth outer electrode disposed on the second end surface and the first main surface,
wherein, at a position of 1/2 of a dimension of the multilayer body in a direction connecting the first side surface and the second side surface,
a greatest distance, among distances between points on the first main surface and an intersection point between the first main surface and the first end surface or the second end surface in the stacking direction x (vertical direction), is set to a flatness D1, and
a greatest distance, among distances between points on the second main surface and an intersection point between the second main surface and the first end surface or the second end surface in the stacking direction x (vertical direction), is set to a flatness D2, and
the flatness D2 is 4.2 µm or smaller.

4. The multilayer ceramic capacitor according to Claim 3, wherein, at a position of 1/2 of a dimension of the multilayer body in a direction connecting the first end surface and the second end surface,
a greatest distance, among distances between points on the first main surface and an intersection point between the first main surface and the first side surface or the second side surface in the stacking direction x (vertical direction), is set to a flatness D3, and
a greatest distance, among distances between points on the first main surface and an intersection point between the second main surface and the first side surface or the second side surface in the stacking direction x (vertical direction), is set to a flatness D4, and
the flatness D4 is 4.2 µm or smaller.

5. The multilayer ceramic capacitor according to one of Claims 1 to 4, wherein a central portion of the first main surface is raised.

6. The multilayer ceramic capacitor according to Claim 1 or 2, wherein the flatness D2 is 4.2 µm or smaller.

7. The multilayer ceramic capacitor according to Claim 2, wherein the flatness D4 is 4.2 µm or smaller.

8. The multilayer ceramic capacitor according to one of Claims 1 to 7, wherein:
the multilayer body includes an inner layer section,
the inner layer section includes
a first inner electrode that is exposed at one end to the first end surface and the first side surface and that is exposed at the other end to the second end surface and the second side surface,
a second inner electrode that is exposed at one end to the first end surface and the second side surface and that is exposed at the other end to the second end surface and the first side surface, and
an inner dielectric layer; and
in a region that is inward from the first and second side surfaces by 5 µm in the direction connecting the first side surface and the second side surface, a central portion of the second main surface has a recess that is depressed in the stacking direction.

9. The multilayer ceramic capacitor according to one of Claims 1 to 8, wherein:
the multilayer body includes an inner layer section,
the inner layer section includes
a first inner electrode that is exposed at one end to the first end surface and the first side surface and that is exposed at the other end to the second end surface and the second side surface,
a second inner electrode that is exposed at one end to the first end surface and the second side surface and that is exposed at the other end to the second end surface and the first side surface, and
an inner dielectric layer; and
in a region that is inward from the first and second side surfaces by 5 µm in the direction connecting the first side surface and the second side surface, a central portion of the first main surface has a recess that is depressed in the stacking direction.

10. The multilayer ceramic capacitor according to one of Claims 1 to 9, wherein:
the multilayer body includes an inner layer section,
the inner layer section includes
a first inner electrode that is exposed at one end to the first end surface and the first side surface and that is exposed at the other end to the second end surface and the second side surface,
a second inner electrode that is exposed at one end to the first end surface and the second side surface and that is exposed at the other end to the second end surface and the first side surface, and
an inner dielectric layer; and
in a region that is inward from the first and second end surfaces by 5 µm in the direction connecting the first end surface and the second end surface, a central portion of the second main surface has a recess that is depressed in the stacking direction.

11. The multilayer ceramic capacitor according to one of Claims 1 to 11, wherein:
the multilayer body includes an inner layer section,
the inner layer section includes
a first inner electrode that is exposed at one end to the first end surface and the first side surface and that is exposed at the other end to the second end surface and the second side surface,
a second inner electrode that is exposed at one end to the first end surface and the second side surface and that is exposed at the other end to the second end surface and the first side surface, and
an inner dielectric layer; and
in a region that is inward from the first and second end surfaces by 5 µm in the direction connecting the first end surface and the second end surface, a central portion of the first main surface has a recess that is depressed in the stacking direction.

12. The multilayer ceramic capacitor according to Claim 1 or 3, wherein, as viewed in the stacking direction with the second main surface facing above, a central portion of the first side surface and a central portion of the second side surface each have a recess.

13. The multilayer ceramic capacitor according to Claim 1 or 3, wherein, as viewed in the stacking direction with the first main surface facing above, a central portion of the first side surface and a central portion of the second side surface each have a recess.

14. The multilayer ceramic capacitor according to Claim 1 or 3, wherein, as viewed in the stacking direction with the second main surface facing above, a central portion of the first end surface and a central portion of the second end surface each have a recess.

15. The multilayer ceramic capacitor according to Claim 1 or 3, wherein, as viewed in the stacking direction with the first main surface facing above, a central portion of the first end surface and a central portion of the second end surface each have a recess.
